# EUROPEAN PATENT APPLICATION

(11) **EP 4 343 756 A1**
(43) Date of publication of application: **27.03.2024**
(21) Application number: 22823857.2
(22) Date of filing: 31.03.2022
(51) Int. Cl.: G10L 15/22, G10L 15/26

(54) **CROSS-DEVICE DIALOGUE SERVICE CONNECTION METHOD, SYSTEM, ELECTRONIC DEVICE, AND STORAGE MEDIUM**

(30) Priority: 18.06.2021 CN 202110681520
(71) Applicant: Huawei Technologies Co., Ltd., Longgang Shenzhen, Guangdong 518129 (CN)
(72) Inventor: WANG, Hongyu, Shenzhen, Guangdong 518129 (CN)
(74) Representative: Goddar, Heinz J.
(86) International application number: PCT/CN2022/084544
(87) International publication number: WO 2022/262366

(57) **Abstract**

A method and system for cross-device dialog service connection, an electronic device, and a storage medium are provided, to implement cross-device dialog service connection. First, after collecting a first user speech, if determining that the first user speech includes information indicating to send an instruction to a second electronic device (64), a first electronic device (62) sends first information and a first execution instruction to the second electronic device (64), where the first information includes information describing an intention of the first user speech, and the first execution instruction is an execution instruction corresponding to the first user speech; and then after receiving the first execution instruction, the second electronic device (64) collects a second user speech, and then executes a second execution instruction corresponding to the second user speech, where the second execution instruction is an instruction generated based on the first information and the second user speech.

## Description

This application claims priority to Chinese Patent Application No. 202110681520.3, filed with the China National Intellectual Property Administration on June 18, 2021 and entitled "METHOD AND SYSTEM FOR CROSS-DEVICE DIALOG SERVICE CONNECTION, ELECTRONIC DEVICE, AND STORAGE MEDIUM", which is incorporated herein by reference in its entirety.

### TECHNICAL FIELD

This application relates to the field of natural language processing (Natural Language Processing, NLP), and in particular, to a method and system for cross-device dialog service connection, an electronic device, and a computer-readable storage medium.

### BACKGROUND

With the continuous development of artificial intelligence (Artificial Intelligence, AI) technologies, NLP, as a branch of AI, is applied increasingly widely.

Currently, an electronic device may perform human-machine interaction with a user based on an NLP dialog system, to implement a corresponding speech service. For example, after waking up a voice assistant of a mobile phone, a user inputs a speech "Play song A" to the mobile phone. The mobile phone processes, based on a dialog system, the input speech of the user to obtain an execution instruction for playing song A, and automatically plays song A in response to the execution instruction.

Currently, the electronic device cannot implement cross-device dialog service connection.

### SUMMARY

Embodiments of this application provide a method and system for cross-device dialog service connection, an electronic device, and a computer-readable storage medium, to implement cross-device dialog service connection.

According to a first aspect, an embodiment of this application provides a system for cross-device dialog service connection. The system includes a first electronic device and at least one second electronic device.

The first electronic device is configured to: collect a first user speech, and if it is determined that the first user speech includes information indicating to send an instruction to the second electronic device, send first information and a first execution instruction to the second electronic device, where the first information includes information describing an intention of the first user speech, and the first execution instruction is an execution instruction corresponding to the first user speech.

The second electronic device is configured to: after receiving the first execution instruction, collect a second user speech, and execute a second execution instruction corresponding to the second user speech, where the second execution instruction is an instruction generated based on the first information and the second user speech.

Based on the foregoing technical solution, when sending the first execution instruction to the second electronic device, the first electronic device further sends the first information to the second electronic device, to be specific, further sends the information describing the intention of the first user speech. To be specific, the first information is transferred to the second electronic device along with a service flow. In this way, the second electronic device may perform semantic understanding on the newly collected second user speech based on the information that is from the first electronic device and that describes the intention of the first user speech, so as to determine the intention of the second user speech, thereby implementing cross-device dialog service connection.

For example, the first electronic device is a mobile phone, the second electronic device is a large screen device, the first user speech is "Recommend a song to the large screen device", an intention of the user speech is recommending music, and the second user speech is "Switch". The mobile phone sends the first execution instruction and the intention of recommending music to the large screen device. When collecting "Switch", the large screen device identifies, based on the intention of recommending music, that the intention of "Switch" is recommending music, and recommends another song to the user in response to "Switch".

In a possible implementation of the first aspect, the information describing the intention of the first user speech includes a first text of the first user speech and/or a first intention of the first user speech.

For example, the first user speech is "Recommend a song to the large screen device", the first text is a text "Recommend a song to the large screen device", and the first intention is recommending music.

In a possible implementation of the first aspect, the first information includes texts and/or intentions of N rounds of dialogs, and N is a positive integer greater than 1;
the texts of the N rounds of dialogs include the first text of the first user speech, and the intentions of the N rounds of dialogs include the first intention of the first user speech; and the N rounds of dialogs are user dialogs collected by the first electronic device.

In this implementation, the first electronic device transfers information such as the intentions of the N rounds of dialogs to the second electronic device, so that the second electronic device can more accurately identify an intention of a newly collected user speech, thereby implementing more open cross-device dialog service connection. The N rounds of dialogs may include the first user speech.

For example, the first electronic device may transfer, to the second electronic device, related information of the N rounds of dialogs that occur recently. For example, N=3.

In a possible implementation of the first aspect, the first execution instruction includes information representing a slot of the first user speech. In this way, the second electronic device can identify a newly collected user speech more accurately, thereby implementing more open cross-device dialog service connection.

For example, the first user speech is "Recommend song A to the large screen device", and the first electronic device not only transfers intention information of the user speech and the like to the second electronic device, but also transfers a song slot extracted from the user speech to the second electronic device.

In a possible implementation of the first aspect, the first electronic device is specifically configured to: perform speech recognition on the first user speech to obtain the first text; perform semantic understanding on the first text to obtain the first intention and a first slot of the first user speech; if the first slot includes a target device slot, and an entity of the target device slot is the second electronic device, determine that the first user speech includes information indicating to send an instruction to the second electronic device; and generate, based on the first intention and the first slot, the first execution instruction corresponding to the first user speech.

In a possible implementation of the first aspect, the system further includes a third electronic device in communication connection to the first electronic device, and the first electronic device is specifically configured to: send the first user speech to the third electronic device; receive a first slot, the first intention, and the first execution instruction from the third electronic device, where the first slot and the first intention are extracted by the third electronic device from the first user speech, and the first execution instruction is an execution instruction that is corresponding to the first user speech and that is generated by the third electronic device based on the first slot and the first intention; and if the first slot includes a target device slot, and an entity of the target device slot is the second electronic device, determine that the first user speech includes information indicating to send an instruction to the second electronic device.

In this implementation, the first electronic device may parse and identify the first user speech by using a speech service capability of the third electronic device. In this way, the first electronic device may be a device that does not have a capability of deploying a speech service system, so that an application scope of cross-device dialog service connection is wider.

For example, the first electronic device may be alternatively a device such as a smartwatch, a smart headset, and a smart sound box. Even if these devices do not have capabilities of deploying modules such as speech recognition, semantic understanding, and dialog management, cross-device dialog service connection can still be implemented.

In a possible implementation of the first aspect, the second electronic device is specifically configured to: perform speech recognition on the second user speech to obtain a second text; perform semantic understanding on the second text based on the first information, to obtain semantic information of the second user speech; and generate, based on the semantic information of the second user speech, the second execution instruction corresponding to the second user speech.

In a possible implementation of the first aspect, the second electronic device is specifically configured to: use the first information as a latest context of a semantic understanding module, where the second electronic device includes the semantic understanding module; and input the second text to the semantic understanding module, to obtain the semantic information that is of the second user speech and that is output by the semantic understanding module, where the semantic understanding module performs semantic understanding on the second text by using the latest context.

In a possible implementation of the first aspect, the system further includes a fourth electronic device in communication connection to the second electronic device; and the second electronic device is specifically configured to: send the second user speech and the first information to the fourth electronic device; and receive the second execution instruction and semantic information of the second user speech from the fourth electronic device, where
the semantic information of the second user speech is information obtained by performing, by the fourth electronic device, semantic understanding on the second user speech based on the first information, and the second execution instruction is an execution instruction that is corresponding to the second user speech and that is generated by the fourth electronic device based on the semantic information of the second user speech.

In this implementation, the second electronic device may parse and identify the second user speech by using a speech service capability of the fourth electronic device. In this way, the second electronic device may be a device that does not have a capability of deploying a speech service system, so that an application scope of cross-device dialog service connection is wider.

In a possible implementation of the first aspect, the first electronic device is specifically configured to: determine whether a user account of the first electronic device and a user account of the second electronic device belong to a same user; and if the user account of the first electronic device and the user account of the second electronic device belong to the same user, send the first execution instruction and the first information to the second electronic device, and send second information to the second electronic device, where the second information includes any one of or any combination of first user information, scenario information, and first application status information, where
the first user information is information describing a user of the first electronic device, the first application status information is information representing a first target application on the first electronic device, and the scenario information is information describing a user scenario; and
the second electronic device is specifically configured to: generate the second execution instruction based on the first information, the second user speech, and the second information.

In this implementation, the first electronic device automatically identifies whether users of the two devices are a same user, and if the users are the same user, the first electronic device sends the second information to the second electronic device in addition to transferring the first execution instruction and the first information to the second electronic device. In this way, the second electronic device may provide a more personalized and accurate service for the user based on the second information, so as to improve user experience in cross-device dialog service connection.

For example, the first user information is information about user A, and it may be learned, based on the information about user A, that a preferred song type of the user is a pop song. It may be learned, by using the scenario information, that the user is in a walking state, in other words, is in a sports scenario. The first target application is Huawei Music installed on the mobile phone, and the first application status information includes a song playing history on Huawei Music.

In this case, the first user speech is "Recommend a song to the large screen device", and the second user speech is "Switch". After the mobile phone sends the information to the large screen device, when generating the second execution instruction, the large screen device determines, based on the fact that the user is in the sports scenario and the preferred song type of the user is a pop song, that a pop music song for the sports scenario needs to be recommended. Further, a pop music song that is played a largest quantity of times and that belongs to the sports scenario is selected as a recommended song based on a song playing history. In this way, the recommended song better meets user preference.

In addition, the second information may be further used for semantic understanding of the second electronic device, so that the second electronic device may more accurately understand an intention of a newly collected user speech, thereby implementing more open cross-device dialog service connection. For example, the first electronic device transfers information about a historically played song to the second electronic device, where the information about the historically played song includes a song name. When collecting "Switch to XXX", the second electronic device may identify "XXX" as a song name based on the song name, so as to identify that an intention of a newly collected user speech is playing song XXX.

In a possible implementation of the first aspect, the first electronic device is specifically configured to: if the user account of the first electronic device and the user account of the second electronic device do not belong to the same user, send the first execution instruction and the first information to the second electronic device; and
the second electronic device is specifically configured to: generate the second execution instruction based on the first information, the second user speech, and third information, where the third information includes second user information and/or second application status information, where the second user information is information describing a user of the second electronic device, and the second application status information is information representing a second target application on the second electronic device.

In this implementation, the first electronic device automatically identifies whether the accounts of the two devices belong to a same user, and if the accounts of the two devices do not belong to a same user, the first electronic device may not need to send user information on the first electronic device. In this case, the second electronic device may provide a more personalized and accurate service for the user based on related information about the source device. For example, the second target application may be a Huawei Music application installed on the second electronic device.

In a possible implementation of the first aspect, if there are at least two second electronic devices, and connection manners between the at least two second electronic devices and the first electronic device are different, the first electronic device is specifically configured to:
determine a type of a communication connection to each of the at least two second electronic devices; and
send the first information and the first execution instruction to each of the at least second electronic devices based on the type of the communication connection by using a different communication connection.

In this implementation, if the first execution instruction and the first information need to be distributed to the at least two second electronic devices, the first electronic device automatically identifies a communication connection type, and sends corresponding information to a corresponding second electronic device based on the communication connection type.

Corresponding information is simultaneously distributed to the two second electronic devices by using one voice command, so as to connect a dialog service to the at least two second electronic devices, so that it is more convenient, and user experience is better.

In a possible implementation of the first aspect, the second electronic device is specifically configured to: collect the second user speech when the first execution instruction is executed or when a user is prompted whether to execute the first execution instruction. The user is prompted whether to execute the first execution instruction, so that cross-device dialog service connection may be more user-friendly.

In a possible implementation of the first aspect, the second electronic device is further configured to: after receiving the first execution instruction, wake up a voice assistant, where the second electronic device includes the voice assistant.

In this implementation, the second electronic device automatically wakes up the voice assistant, and the user does not need to wake up the voice assistant on the second electronic device by using a specific wakeup word, so that cross-device dialog service connection is smoother, and user experience is better.

In a possible implementation of the first aspect, the first execution instruction is an instruction for recommending music, and the second execution instruction is an instruction for recommending another song.

According to a second aspect, an embodiment of this application provides a method for cross-device dialog service connection, applied to a first electronic device. The method includes: collecting a first user speech, and sending first information and a first execution instruction to a second electronic device after it is determined that the first user speech includes information indicating to send an instruction to the second electronic device, where the first information includes information describing an intention of the first user speech, and the first execution instruction is an execution instruction corresponding to the first user speech.

In a possible implementation of the second aspect, the information describing the intention of the first user speech includes a first text of the first user speech and/or a first intention of the first user speech.

In a possible implementation of the second aspect, the first information includes texts and/or intentions of N rounds of dialogs, and N is a positive integer greater than 1;
the texts of the N rounds of dialogs include the first text of the first user speech, and the intentions of the N rounds of dialogs include the first intention of the first user speech; and the N rounds of dialogs are user dialogs collected by the first electronic device.

In a possible implementation of the second aspect, the first execution instruction includes information representing a slot of the first user speech.

In a possible implementation of the second aspect, the sending first information and a first execution instruction to a second electronic device after it is determined that the first user speech includes information indicating the second electronic device includes:
performing speech recognition on the first user speech to obtain the first text;
performing semantic understanding on the first text to obtain the first intention and a first slot of the first user speech;
if the first slot includes a target device slot, and an entity of the target device slot is the second electronic device, determining that the first user speech includes information indicating to send an instruction to the second electronic device;
generating, based on the first intention and the first slot, the first execution instruction corresponding to the first user speech; and
sending the first information and the first execution instruction to the second electronic device, where the first information includes the first intention and/or the first text.

In a possible implementation of the second aspect, the sending first information and a first execution instruction to a second electronic device after it is determined that the first user speech includes information indicating the second electronic device includes:
sending the first user speech to the third electronic device;
receiving a first slot, the first intention, and the first execution instruction from the third electronic device, where the first slot and the first intention are extracted by the third electronic device from the first user speech, and the first execution instruction is an execution instruction that is corresponding to the first user speech and that is generated by the third electronic device based on the first slot and the first intention;
if the first slot includes a target device slot, and an entity of the target device slot is the second electronic device, determining that the first user speech includes information indicating to send an instruction to the second electronic device; and
sending the first information and the first execution instruction to the second electronic device, where the first information includes the first intention and/or the first text of the first user speech.

In a possible implementation of the second aspect, before the first information and the first execution instruction are sent to the second electronic device, the method further includes:
determining whether a user account of the first electronic device and a user account of the second electronic device belong to a same user; and
if the user account of the first electronic device and the user account of the second electronic device belong to the same user, performing a step of sending the first execution instruction and the first information to the second electronic device, and send second information to the second electronic device, where the second information includes any one of or any combination of first user information, scenario information, and first application status information, where
the first user information is information describing a user of the first electronic device, the scenario information is information describing a user scenario, and the first application status information is information representing a first target application on the first electronic device.

In a possible implementation of the second aspect, if there are at least two second electronic devices, the sending the first information and the first execution instruction to the second electronic device includes:
determining a type of a communication connection to each of the at least two second electronic devices; and
sending the first information and the first execution instruction to each of the at least second electronic devices based on the type of the communication connection by using a different communication connection.

In a possible implementation of the second aspect, the first execution instruction is an instruction for recommending music.

According to a third aspect, an embodiment of this application provides a method for cross-device dialog service connection, applied to a second electronic device. The method includes:
receiving a first execution instruction and first information from a first electronic device, where the first information includes information describing an intention of a first user speech, the first execution instruction is an execution instruction corresponding to the first user speech, and the first user speech is a speech that is collected by the first electronic device and that includes information indicating to send an instruction to the second electronic device; and
collecting a second user speech, and executing a second execution instruction corresponding to the second user speech, where the second execution instruction is an instruction generated based on the first information and the second user speech.

In a possible implementation of the third aspect, the information describing the intention of the first user speech includes a first text of the first user speech and/or a first intention of the first user speech.

In a possible implementation of the third aspect, the first information includes texts and/or intentions of N rounds of dialogs, and N is a positive integer greater than 1;
the texts of the N rounds of dialogs include the first text of the first user speech, and the intentions of the N rounds of dialogs include the first intention of the first user speech; and the N rounds of dialogs are user dialogs collected by the first electronic device.

In a possible implementation of the third aspect, the first execution instruction includes information representing a slot of the first user speech.

In a possible implementation of the third aspect, the executing a second execution instruction corresponding to the second user speech includes:
performing speech recognition on the second user speech to obtain a second text;
performing semantic understanding on the second text based on the first information, to obtain semantic information of the second user speech;
generating, based on the semantic information of the second user speech, the second execution instruction corresponding to the second user speech; and
executing the second execution instruction.

In a possible implementation of the third aspect, the performing semantic understanding on the second text based on the first information, to obtain semantic information of the second user speech includes:
using the first information as a latest context of a semantic understanding module, where the second electronic device includes the semantic understanding module; and
inputting the second text to the semantic understanding module, to obtain the semantic information that is of the second user speech and that is output by the semantic understanding module, where the semantic understanding module performs semantic understanding on the second text by using the latest context.

In a possible implementation of the third aspect, if a user account of the first electronic device and a user account of the second electronic device belong to a same user, the method further includes:
receiving second information from the first electronic device, where the second information includes any one of or any combination of first user information, scenario information, and first application status information; and
the generating, based on the semantic information of the second user speech, the second execution instruction corresponding to the second user speech includes:
   generating the second execution instruction based on the semantic information and the second information, where
   the first user information is information describing a user of the first electronic device, the scenario information is information describing a user scenario, and the first application status information is information representing a first target application on the first electronic device.

In a possible implementation of the third aspect, if a user account of the first electronic device and a user account of the second electronic device do not belong to a same user, the generating, based on the semantic information of the second user speech, the second execution instruction corresponding to the second user speech includes:
generating the second execution instruction based on the semantic information and third information, where
the third information includes second user information and/or second application status information, the second user information is information describing a user of the second electronic device, and the second application status information is information representing a second target application on the second electronic device.

In a possible implementation of the third aspect, the executing a second execution instruction corresponding to the second user speech includes:
sending the second user speech and the first information to a fourth electronic device;
receiving the second execution instruction and semantic information of the second user speech from the fourth electronic device, where
the semantic information of the second user speech is information obtained by performing, by the fourth electronic device, semantic understanding on the second user speech based on the first information, and the second execution instruction is an execution instruction that is corresponding to the second user speech and that is generated by the fourth electronic device based on the semantic information of the second user speech; and
executing the second execution instruction.

In a possible implementation of the third aspect, the collecting a second user speech includes: collecting the second user speech when the first execution instruction is executed or when a user is prompted whether to execute the first execution instruction.

In a possible implementation of the third aspect, before the second user speech is collected, the method further includes: after receiving the first execution instruction, waking up a voice assistant, where the second electronic device includes the voice assistant.

In a possible implementation of the third aspect, the second execution instruction is an instruction for recommending another song.

According to a fourth aspect, an embodiment of this application provides a terminal device, including a memory, a processor, and a computer program that is stored in the memory and that is capable of running on the processor. When executing the computer program, the processor implements the method according to any possible implementation of the second aspect or the third aspect.

According to a fifth aspect, an embodiment of this application provides a computer-readable storage medium. The computer-readable storage medium stores a computer program. When the computer program is executed by a processor, the method according to any possible implementation of the second aspect or the third aspect is implemented.

According to a sixth aspect, an embodiment of this application provides a chip system. The chip system includes a processor, the processor is coupled to a memory, and the processor executes a computer program stored in the memory, to implement the method according to any possible implementation of the second aspect or the third aspect. The chip system may be a single chip or a chip module including a plurality of chips.

According to a seventh aspect, an embodiment of this application provides a computer program product. When the computer program product runs on an electronic device, the electronic device is enabled to perform the method according to any possible implementation of the second aspect or the third aspect.

It may be understood that, for beneficial effects of the second aspect to the seventh aspect, refer to related descriptions in the first aspect. Details are not described herein again.

### BRIEF DESCRIPTION OF DRAWINGS

FIG. 1 is a schematic diagram of a speech service system according to an embodiment of this application;
FIG. 2A, FIG. 2B, FIG. 2C, and FIG. 2D are a schematic diagram of a scenario in which a mobile phone is controlled to play music by using a speech according to an embodiment of this application;
FIG. 3A, FIG. 3B, and FIG. 3C are a schematic diagram of a scenario in which a mobile phone recommends music to a large screen device according to an embodiment of this application;
FIG. 4 is a schematic diagram of a system for cross-device dialog service connection according to an embodiment of this application;
FIG. 5 is another schematic diagram of a system for cross-device dialog service connection according to an embodiment of this application;
FIG. 6A and FIG. 6B are schematic diagrams of a scenario in which a mobile phone recommends music to a large screen device according to an embodiment of this application;
FIG. 7 is a schematic flowchart of recommending music by a mobile phone to a large screen device according to an embodiment of this application;
FIG. 8A to FIG. 8C are schematic diagrams of a navigation scenario according to an embodiment of this application;
FIG. 8D-1 and FIG. 8D-2 are a schematic diagram of a video recommendation scenario according to an embodiment of this application;

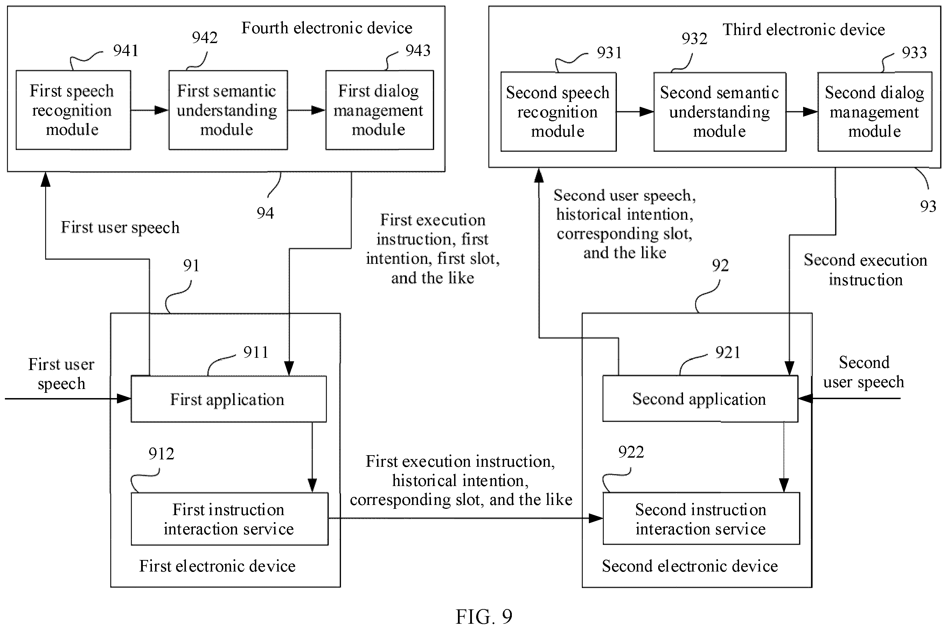

FIG. 9 is another schematic diagram of a system for cross-device dialog service connection according to an embodiment of this application;

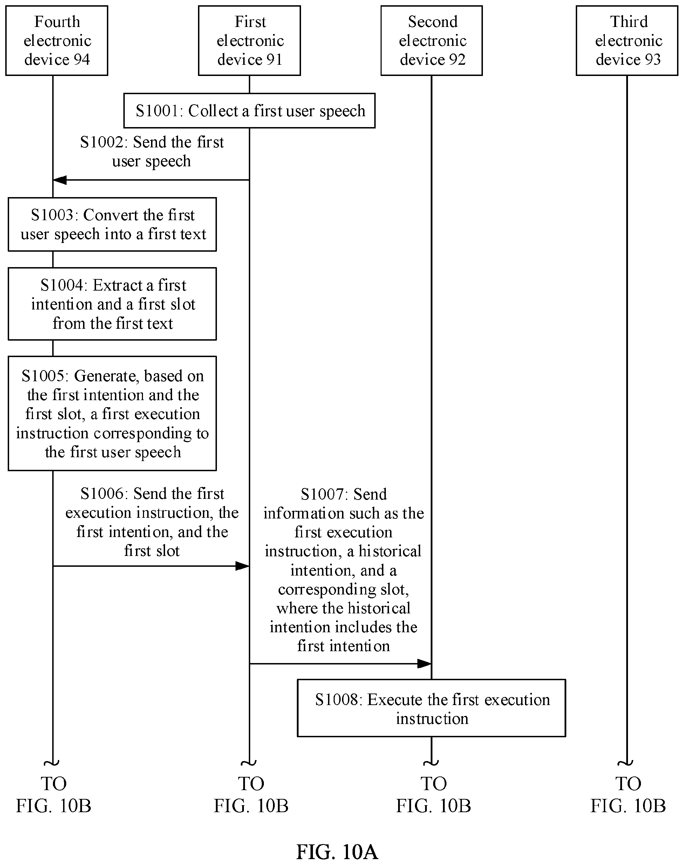

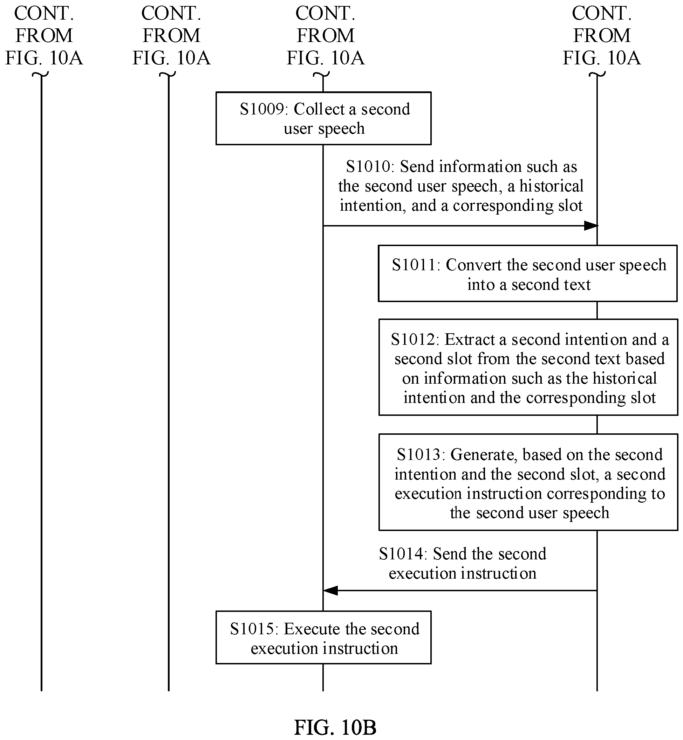

FIG. 10A and FIG. 10B are another schematic flowchart of a method for cross-device dialog service connection according to an embodiment of this application;

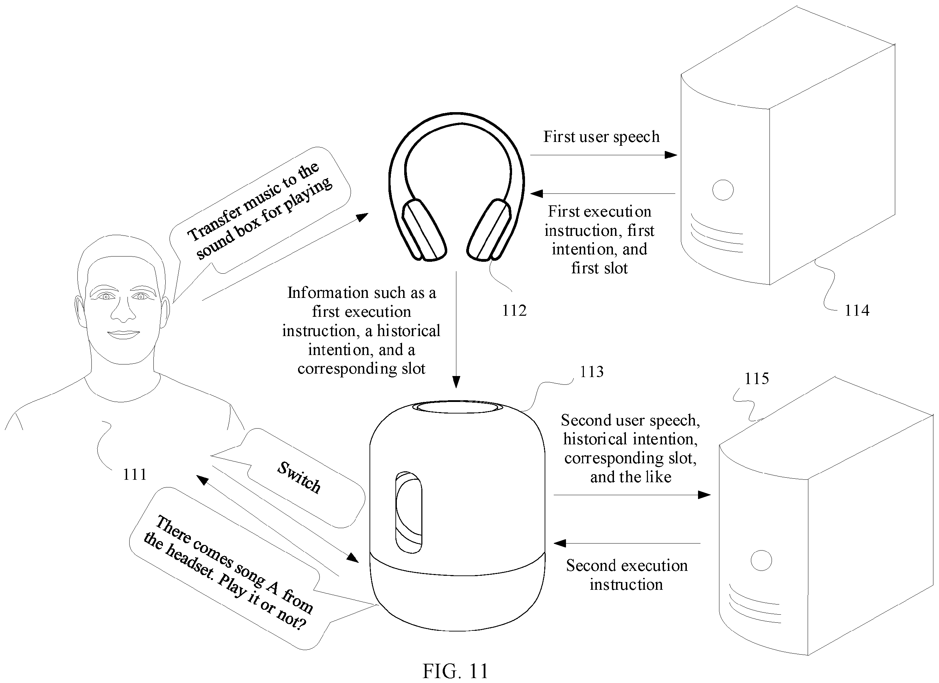

FIG. 11 is a schematic diagram of a scenario in which a headset transfers music to a sound box for playing according to an embodiment of this application;

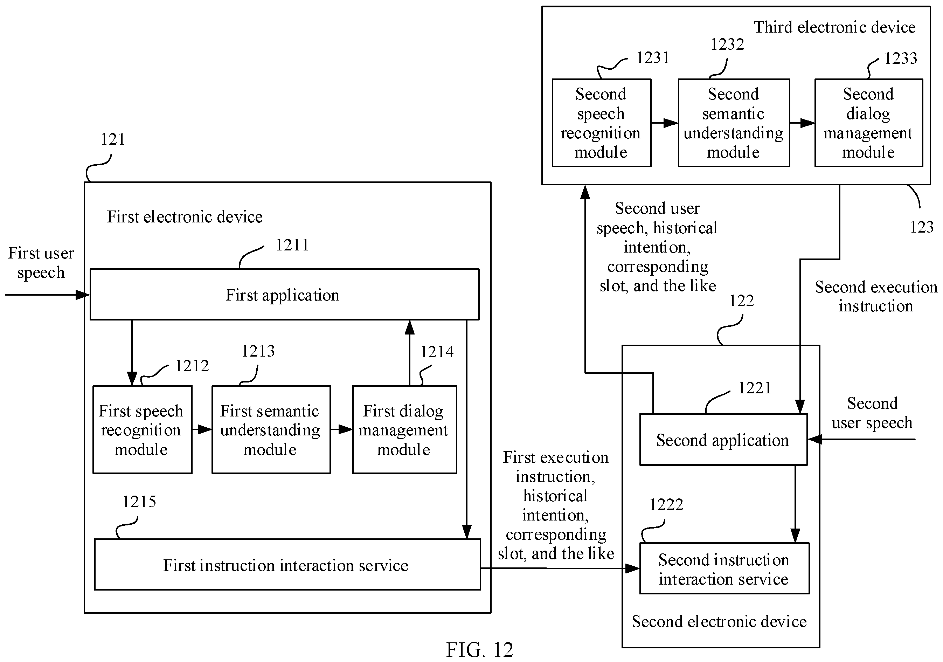

FIG. 12 is still another schematic diagram of a system for cross-device dialog service connection according to an embodiment of this application;

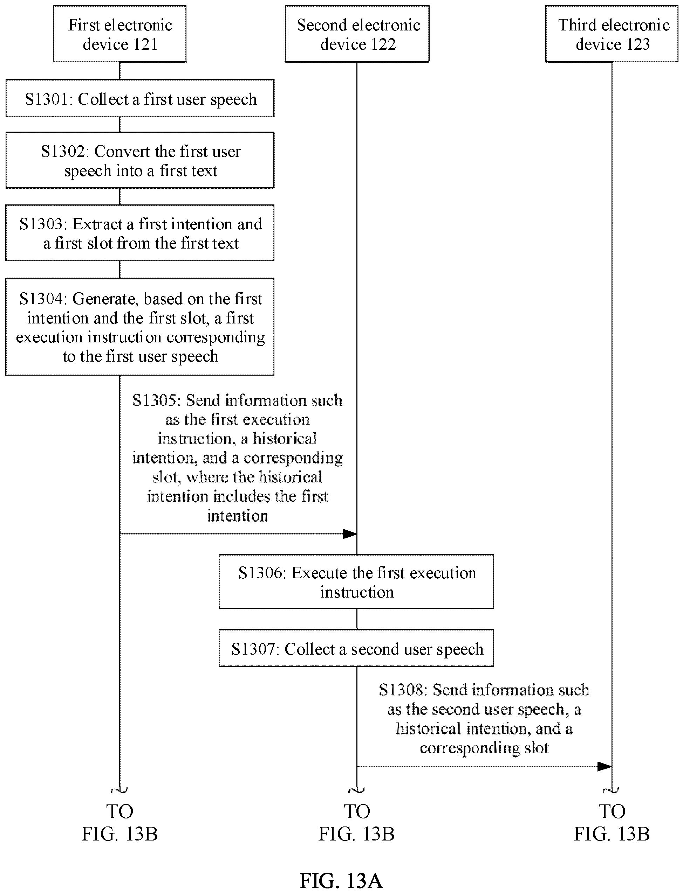

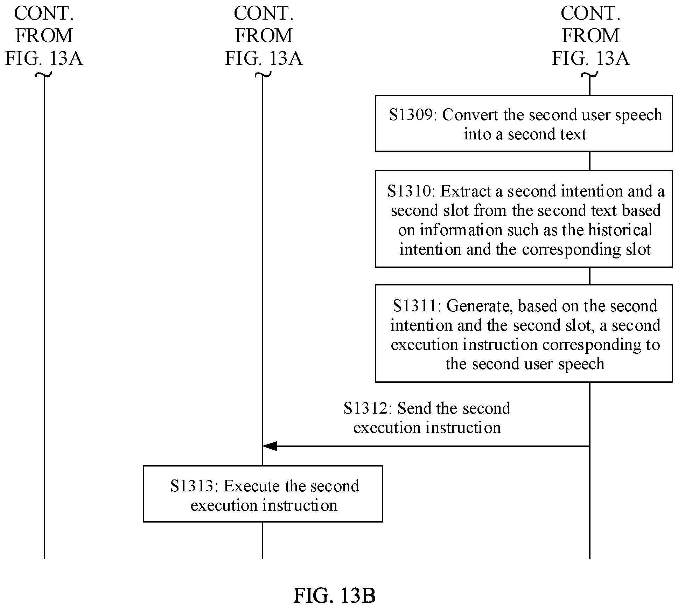

FIG. 13A and FIG. 13B are still another schematic flowchart of a method for cross-device dialog service connection according to an embodiment of this application;

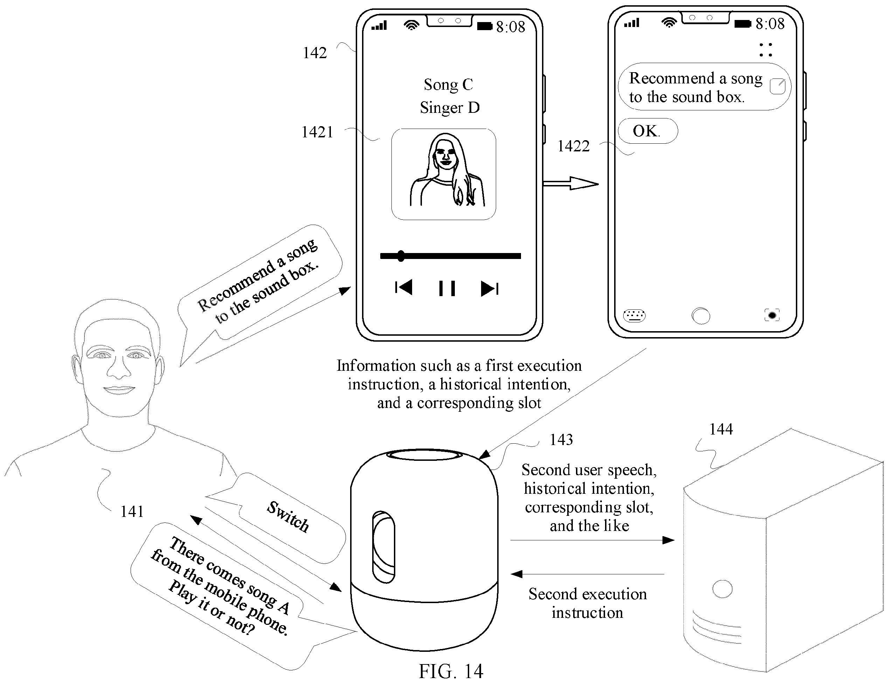

FIG. 14 is a schematic diagram of a scenario in which a mobile phone recommends music to a smart sound box according to an embodiment of this application; and

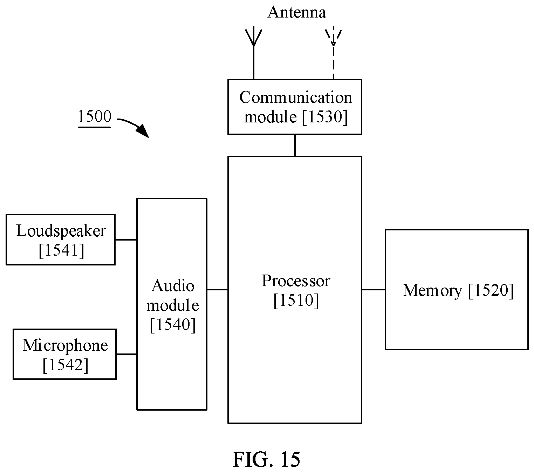

FIG. 15 is a schematic diagram of a hardware structure of an electronic device according to an embodiment of this application.

### DESCRIPTION OF EMBODIMENTS

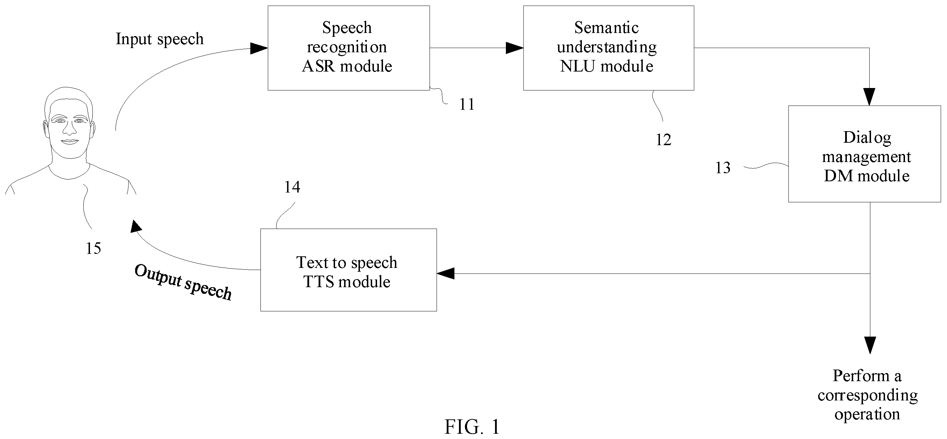

The following describes, by using an example, related content that may be included in embodiments of this application.
(1) Speech service system: is also referred to as dialog service system. FIG. 1 is a schematic diagram of a speech service system according to an embodiment of this application. As shown in FIG. 1, the speech system may include a speech recognition (Automatic Speech Recognition, ASR) module 11, a semantic understanding (Natural Language Understanding, NLU) module 12, a dialog management (Dialogue Management, DM) module 13, and a text to speech (Text To Speech, TTS) module 14.

The speech recognition module 11 is configured to convert speech information input by a user 15 to text information.

The semantic understanding module 12 is configured to perform semantic understanding based on the text information output by the speech recognition module 11, to obtain semantic information. The semantic information usually includes an intention and a slot value.

The dialog management module 13 is configured to update a system state based on the semantic information output by the semantic understanding module 12 and a dialog state, and output a system action of a next step.

The dialog management module 13 includes a dialog state tracking (Dialog State Tracking, DST) sub-module and a dialog policy (Dialog Policy, DP) sub-module. The dialog state tracking sub-module is configured to maintain and update the dialog state, and the dialog policy sub-module is configured to generate system behavior based on the dialog state, the semantic information, and the like, so as to determine a next action.

An electronic device may perform a corresponding operation based on an instruction output by the dialog management module 13. If the instruction output by the dialog management module 13 is an instruction indicating to output a speech, the text to speech module 14 may generate speech information based on the instruction output by the dialog management module 13, to obtain output speech. For example, speech information input by the user 15 is "Play a song", the dialog management model 13 outputs an instruction indicating to output speech, and the text to speech module 14 generates output speech "What song do you want to play?" according to the instruction indicating to output speech.

If the instruction output by the dialog management module 13 is an instruction of another type, the electronic device performs a corresponding operation in response to the instruction. For example, in this embodiment of this application, an output of the dialog management module 13 may be specifically represented as an execution instruction, and the execution instruction indicates a next action. For example, the speech information input by the user 15 is "Play song A", the dialog management module 13 outputs an execution instruction for playing song A, and the electronic device automatically plays song A in response to the execution instruction.

It may be understood that, in addition to the modules shown in FIG. 1, another speech service system may further include a natural language generation (Natural Language Generation, NLG) module. The natural language generation module is configured to text a system action output by the dialog management module 13, to obtain a natural language text. The natural language text output by the natural language generation module may be used as an input of the text to speech module 14. The text to speech module 14 converts the input natural speech text into speech information to obtain output speech.

### (2) Intention, slot, and slot value

An intention may be a user purpose expressed in a user speech. For example, the user speech is "How is the weather in Shenzhen today", and an intention of the speech is "querying the weather". For another example, the user speech is "Play a song", and an intention of the speech is "playing music".

One or more slots may be configured for each intention. A slot refers to key information that the system needs to collect from a user speech. For example, for the intention of querying the weather, configured slots may include a location slot and a time slot. The location slot is used to determine a location whose weather needs to be queried, and the time slot is used to determine a time when the weather needs to be queried.

The slot includes an attribute such as a slot value. The slot value is a specific parameter of the slot, and may also be referred to as an entity of the slot. For example, the user speech is "How is the weather in Shenzhen today", and a location slot and a time slot may be extracted from the speech. An entity of the location slot is "Beijing", and an entity of the time slot is "today".

In a specific application, an intention type and a slot configured for each intention type may be preset. For example, in this embodiment of this application, a slot configured for the intention of recommending music includes but is not limited to a target device slot, and the target device slot indicates a target device for connecting a dialog service. For example, a mobile phone needs to connect the dialog service to a large screen device. In this case, a source device is the mobile phone, and a target device is the large screen device.

The electronic device may perform one or more rounds of human-machine dialogs with the user based on the speech service system, to implement a corresponding speech service.

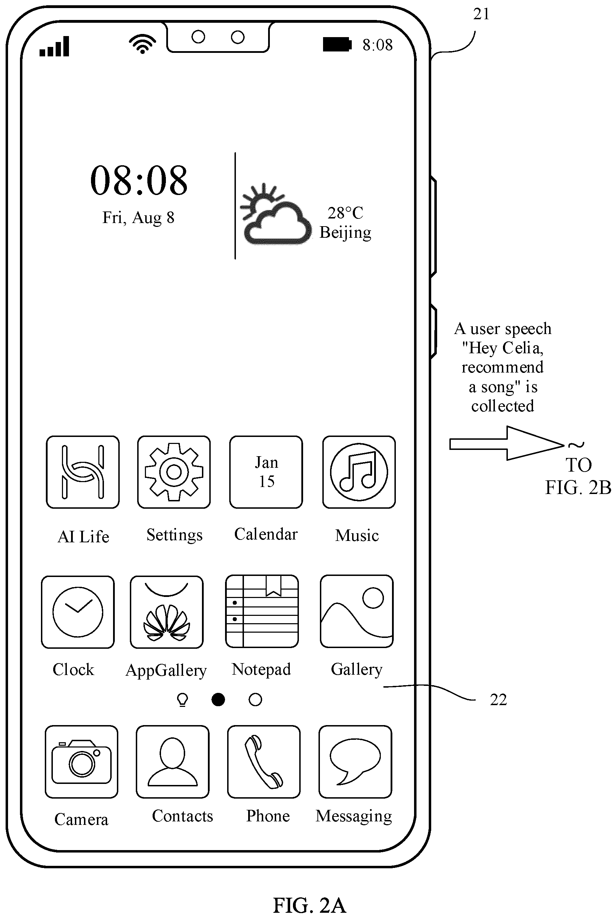

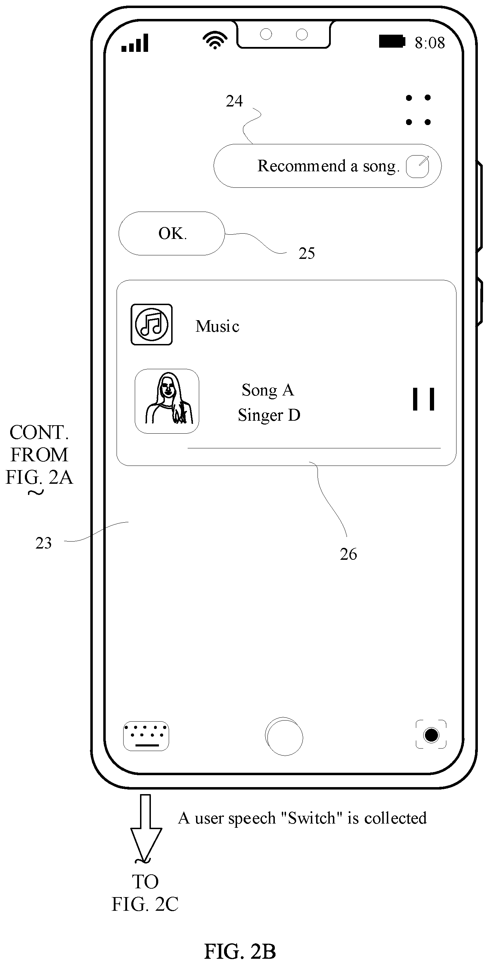

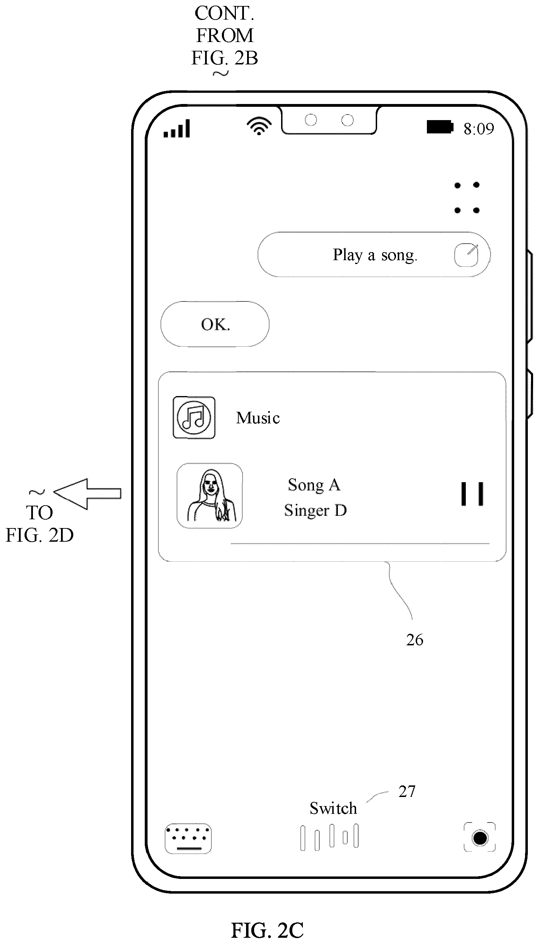

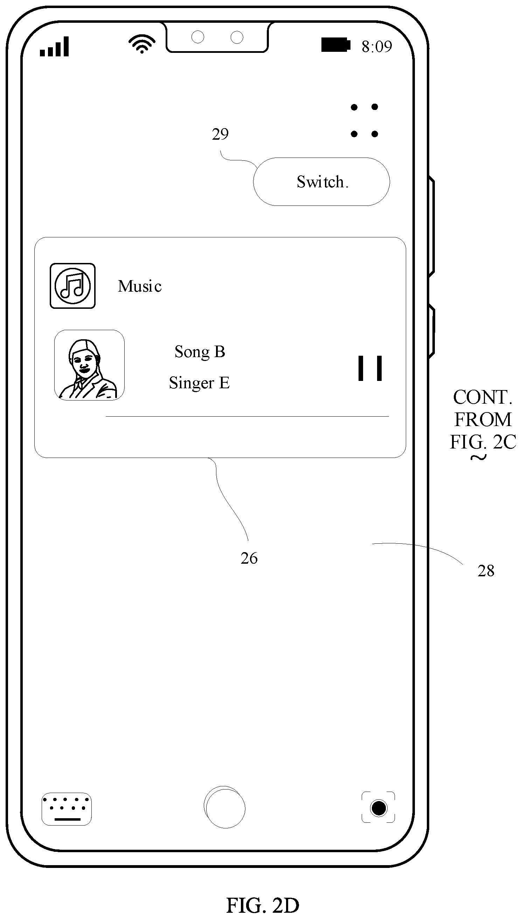

For example, FIG. 2A, FIG. 2B, FIG. 2C, and FIG. 2D are a schematic diagram of a scenario in which a mobile phone is controlled to play music by using a speech according to an embodiment of this application. As shown in FIG. 2A, FIG. 2B, FIG. 2C, and FIG. 2D, a home screen 22 of a mobile phone 21 includes applications such as an application mall, a clock, a memo, a gallery, and music.

After the user wakes up a voice assistant Celia of the mobile phone 21 by using a wakeup word "Hey Celia", the mobile phone 21 collects a user speech "Hey Celia, recommend a song". Then, the voice assistant of the mobile phone 21 performs processes such as speech recognition and semantic understanding on the user speech by using the speech service system shown in FIG. 1, determines that a user intention is recommending music, and obtains an execution instruction for recommending music. In this case, because an entity whose song name slot cannot be extracted from the user speech, the mobile phone 21 may determine a recommended song according to a preset recommendation rule. For example, the mobile phone 21 may use, based on a playing history of the user, a song that is most frequently played in the last seven days as the recommended song.

The mobile phone 21 automatically plays song A in response to the execution instruction for recommending music, and displays a voice assistant interface 23. The voice assistant interface 23 includes a text 24 of the user speech, an answer statement text 25 of the voice assistant for the user speech, and a music control 26. In this case, as displayed in the music control 26, a song that is being played is song A.

After the mobile phone 21 automatically plays song A in response to the user speech "Hey Celia, recommend a song", the user wants to switch to another song, and then inputs a user speech "Switch" to the mobile phone 21. After collecting the user speech "switch", the mobile phone 21 converts the user speech into text information by using the speech recognition module, and displays, in the voice assistant interface 23, text information 27 of the speech input by the user.

The mobile phone 21 inputs text information of "Switch" to the semantic understanding module. The semantic understanding module determines, based on information such as a historical intention and the input text information, that the user intention is switching a playlist, and obtains an execution instruction for playing another song. In this case, the historical intention is recommending music, and is an intention determined based on the user speech "Hey Celia, recommend a song".

The mobile phone 21 automatically plays song B in response to the execution instruction for playing another song, and displays a language assistant interface 28. The voice assistant interface 28 includes a text 29 of a user speech and the music control 26. In this case, as displayed in the music control 26, a song that is being played is song B.

In a scenario shown in FIG. 2A, FIG. 2B, FIG. 2C, and FIG. 2D, an entire dialog interaction process between the user and the voice assistant Celia of the mobile phone 21 may be as follows:
User: Hey Celia.
Celia: Hey.
User: Hey Celia, recommend a song.
Celia: OK.
User: Switch.
Celia: OK.

In the dialog process, the user speech "Switch" does not specify a user intention. However, the mobile phone 21 can still accurately identify the user intention based on context information such as a historical intention and a dialog corpus. In this case, the dialog corpus may include "Hey Celia, recommend a song". This is because the entire dialog interaction process occurs on a side of the mobile phone 21, and the mobile phone 21 stores information related to the dialog process.

However, in some cases, for example, in cross-device dialog service connection, a part of the dialog process occurs on the first electronic device, and the other part occurs on the second electronic device. The second electronic device does not have related information about the entire dialog process. Consequently, the second electronic device may not identify a user intention, and therefore cross-device dialog service connection cannot be implemented.

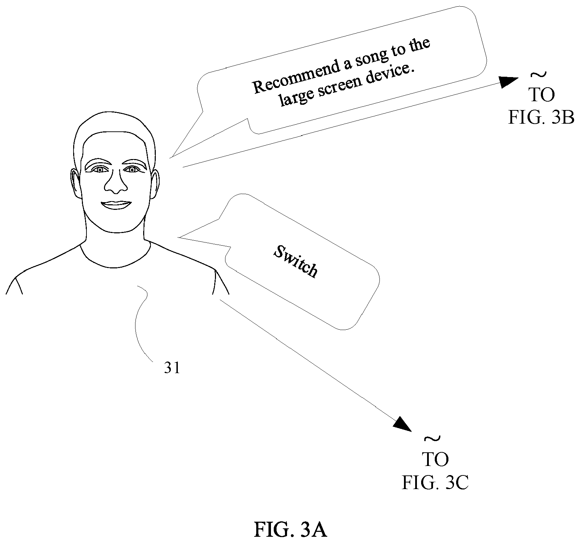

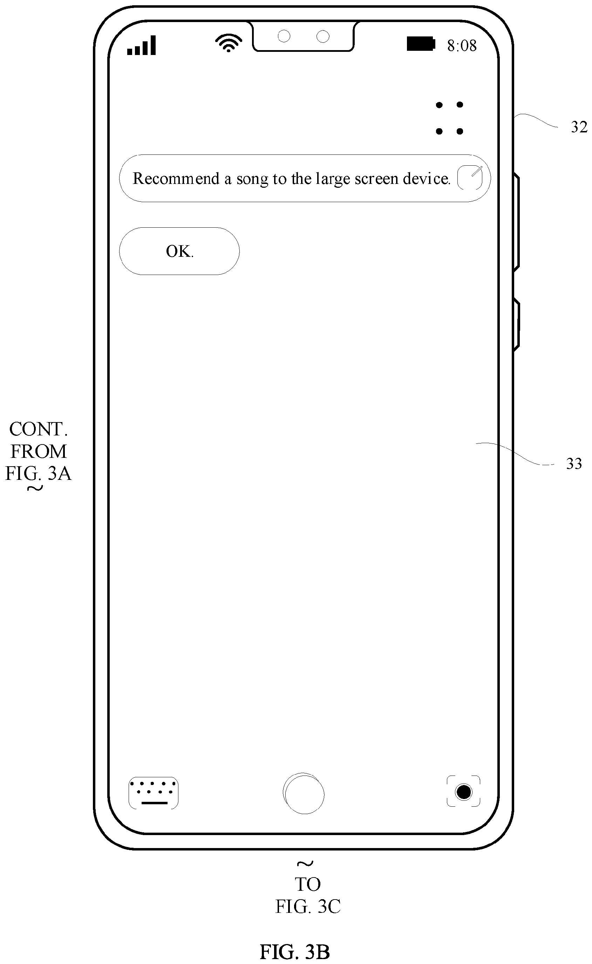

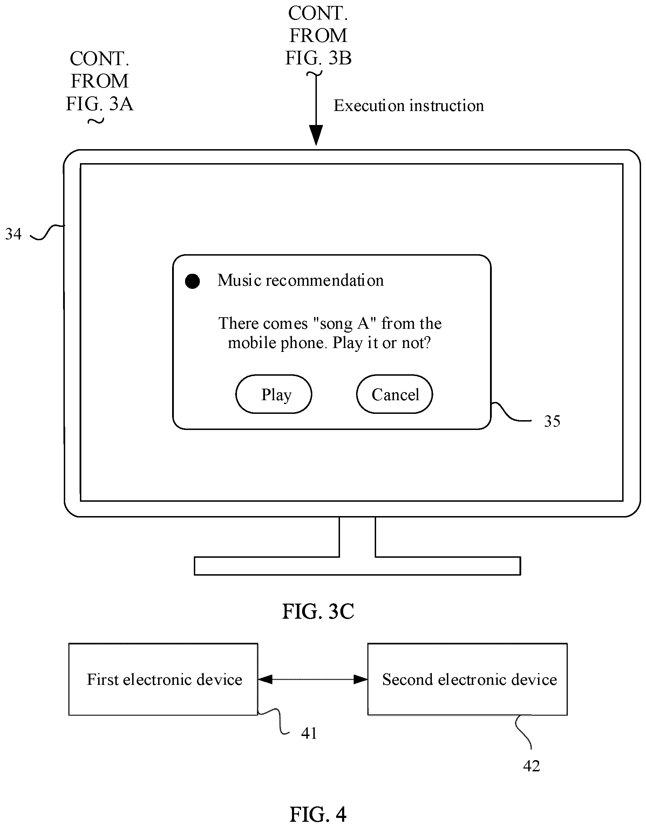

For example, FIG. 3A, FIG. 3B, and FIG. 3C are a schematic diagram of a scenario in which a mobile phone recommends music to a large screen device according to an embodiment of this application. In this case, the first electronic device is a mobile phone, and the second electronic device is a large screen device. A voice assistant is disposed and the speech service system in FIG. 1 is deployed in each of the mobile phone and the large screen device.

As shown in FIG. 3A, FIG. 3B, and FIG. 3C, a user 31 inputs a user speech "Recommend a song to the large screen device" to a mobile phone 32. After the mobile phone 32 collects the user speech "Recommend a song to the large screen device", a voice assistant in the mobile phone 32 determines, by using the speech service system shown in FIG. 1, that an intention of the user speech "Recommend a song to the large screen device" is recommending music, and can extract a target device slot. An entity of the target device slot is the large screen device. Then, the mobile phone 32 generates an execution instruction for recommending music, displays a voice assistant interface 33, and outputs an answer speech "OK" for the user speech. Finally, the execution instruction for recommending music is sent to a large screen device 34. The execution instruction for recommending music includes but is not limited to song name information, and indicates the large screen device 34 to play a song.

After the large screen device 34 receives the execution instruction from the mobile phone 33, a window 35 pops up in response to the execution instruction. Prompt information is displayed in the window 35, and is used to ask the user whether to play song A recommended by the mobile phone. The user may click a "Play" button on the window 35 to enable the large screen device 34 to play song A; or may click a "Cancel" button on the window to enable the large screen device 34 to cancel playing song A.

Alternatively, the user may input a speech "Play" or "Cancel" to the large screen device 34, to indicate a button selection intention to the large screen device 34. When a speech input by the user is "Play", the large screen device 34 selects the "Play" button. When the speech input by the user is "Cancel", the large screen device 34 selects the "Cancel" button.

After the large screen device 34 displays the window 35, if the user 31 wants to switch to another song, the user 31 may input a user speech "Switch" to the large screen device 34. After collecting the user speech "Switch", a voice assistant in the large screen device 34 inputs text information "Switch" to the semantic understanding module during intention identification. In this case, the large screen device 34 does not locally have context information such as a historical intention "recommending music" of the dialog process, an entity of a target device slot, and a historical corpus "Recommend a song to the large screen device" of "Switch". Therefore, the semantic understanding module cannot identify an intention of the user speech, and the large screen device 34 cannot play another song in response to the user speech.

It can be learned from the foregoing that, after the mobile phone 32 transfers the service to the large screen device 34, the large screen device 34 can only select to play or cancel, and cannot identify another user speech associated with a previous dialog. This cannot implement cross-device dialog service connection.

In a research process, the inventor finds that, related information describing an intention of a user speech may be transmitted to a target device along with a service flow, so as to implement cross-device dialog service connection.

An embodiment of this application provides a solution to cross-device dialog service connection. In some embodiments, when transferring a service to the second electronic device, the first electronic device may transmit context information such as intentions and slots of latest N rounds of dialogs to the second electronic device. To be specific, the first electronic device transmits the context information such as the intentions and the slots of the latest N rounds of dialogs to the second electronic device along with a service flow. In this way, when performing intention identification, the second electronic device may accurately identify an intention of a user speech based on received context information such as an intention and a slot, so as to implement cross-device dialog service connection. N is a positive integer greater than or equal to 1.

The following describes in detail the solution to cross-device dialog service connection provided in embodiments of this application with reference to the accompanying drawings. In the following description, for illustration instead of limitation, specific details such as a particular system structure and a technology are provided to facilitate a thorough understanding of embodiments of this application.

FIG. 4 is a schematic diagram of a system for cross-device dialog service connection according to an embodiment of this application. The system may include a first electronic device 41 and a second electronic device 42. The first electronic device 41 and the second electronic device 42 may exchange information by using communication connection. The communication connection may be, for example, Bluetooth connection, Wi-Fi point-to-point connection, or the like.

The first electronic device 41 and the second electronic device 42 may include a voice assistant application, or may include an application integrated with a voice assistant function.

In this embodiment of this application, the system for cross-device dialog service connection may include one second electronic device 42 or at least two second electronic devices 42. To be specific, the first electronic device 41 may simultaneously transfer a service to the second electronic device 42 or the at least two second electronic devices 42, and transmit information such as an intention and a slot to the second electronic device 42 during the service transferring.

The first electronic device 41 and the second electronic device 42 may be devices in which a same user account is logged in to. For example, the first electronic device 41 is a mobile phone, the second electronic device 42 is a large screen device, and a same Huawei user account is logged in to in both the mobile phone and the large screen device.

Certainly, the first electronic device 41 and the second electronic device 42 may be alternatively devices in which different user accounts are logged in to. For example, a login account of the first electronic device 41 is user A, and a login account of the second electronic device 42 is user B. In this case, the first electronic device 41 and the second electronic device 42 may belong to a same group, for example, belong to a same family group. Alternatively, the first electronic device 41 and the second electronic device 42 may be devices that have established trusted connection. For example, the first electronic device 41 is a mobile phone, the second electronic device 42 is a large screen device, and the mobile phone and the large screen device establish trusted connection through "Huawei Share OneHop".

In some embodiments, both the first electronic device 41 and the second electronic device 42 may include the speech service system corresponding to FIG. 1, or some modules in the speech service system.

In this case, the first electronic device 41 and the second electronic device 42 are usually rich devices. The rich device is a device with abundant resources. The device with abundant resources may be an electronic device with sufficient storage space, an electronic device with sufficient processing performance, and/or the like. Generally, an electronic device with sufficient processing performance, sufficient memory, and sufficient storage space may be referred to as a rich device or a fat device. For example, the rich device may include a mobile phone, a computer, a server, and a tablet.

A thin device relative to a rich device is a device with limited resources. The device with limited resources may be an electronic device with limited storage space, an electronic device with limited processing performance, and/or the like. Generally, an electronic device with low processing performance, small memory, and small storage space may be referred to as a thin device. For example, the thin device may include a headset, a sound box, and a watch.

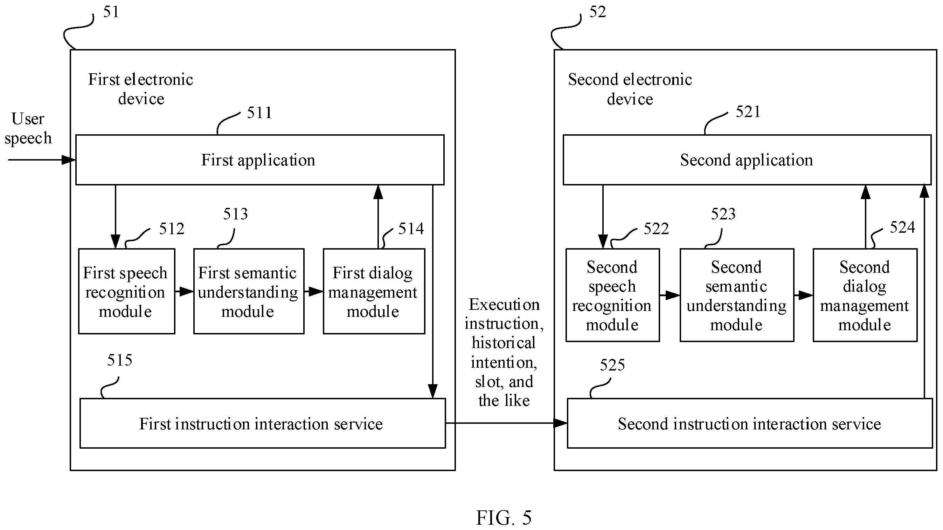

For example, FIG. 5 is another schematic diagram of a system for cross-device dialog service connection according to an embodiment of this application. A first electronic device 51 includes a first application 511, a first speech recognition module 512, a first semantic understanding module 513, a first dialog management module 514, and a first instruction interaction service 515. A second electronic device 52 includes a second application 521, a second speech recognition module 522, a second semantic understanding module 523, a second dialog management module 524, and a second instruction interaction service 525.

It should be noted that the first electronic device 51 and the second electronic device 52 may include an NLG module and a TTS module, or may not include an NLG module and a TTS module.

The first application 511 may be a voice assistant, or may be an application integrated with a voice assistant function. Similarly, the second application 521 may be a voice assistant, or may be an application integrated with a voice assistant function.

The first instruction interaction service 515 and the second instruction interaction service 525 are used for instruction interaction between the electronic devices. In another embodiment, instruction interaction between devices may be alternatively implemented in another manner.

As shown in FIG. 5, after the first electronic device 51 collects a user speech, the first application 511 inputs the user speech to the first speech recognition module 512, to obtain text information output by the first speech recognition module 512; then inputs, to the first semantic understanding module 513, the text information output by the first speech recognition module 512, to obtain semantic information of a user speech output by the first semantic understanding module 513, where the semantic information includes an intention extracted from the user speech, a slot corresponding to the intention, and the like; and next, inputs the semantic information to the first dialog management module 514, to obtain an execution instruction.

After obtaining the execution instruction output by the first dialog management module 514, the first application 511 transmits information such as the execution instruction, a historical intention, and a slot corresponding to the historical intention to the second electronic device 52 by using the first instruction interaction service 515. The historical intention may include intentions corresponding to N rounds of dialogs that occur recently.

It should be noted that the first electronic device 51 may determine, based on a user speech, whether information such as an execution instruction, a historical intention, and a corresponding slot needs to be sent to the second electronic device 52, in other words, determine whether a service needs to be transferred, to be specific, determine whether an instruction needs to be sent to the second electronic device 52, and carry context information such as the historical intention and the corresponding slot when sending the instruction.

For example, if the first electronic device 51 may extract a target device slot from the user speech, and an entity of the target device slot is not the source device, the first electronic device 51 may determine that a service needs to be transferred, and use the entity of the target device slot as a target device for transferring the service. In other words, the first electronic device 51 determines that information such as an execution instruction, a historical intention, and a corresponding slot needs to be sent to the second electronic device 52 (namely, the target device). For example, in the scenario in FIG. 3A, FIG. 3B, and FIG. 3C, the mobile phone 32 may extract a target device slot from a user speech "Recommend a song to the large screen device", and an entity of the target device slot is a large screen device. In this case, it is determined that a service needs to be transferred, and the target device for transferring the service is the large screen device.

Further, if the first electronic device 51 may extract at least two target device slots from the user speech, and none of entities of the at least two target device slots are the source device, the first electronic device 51 may determine that information such as an execution instruction, a historical intention, and a corresponding slot needs to be sent to the target device corresponding to the at least two target device slots. In this case, the first electronic device 51 may simultaneously distribute information such as an execution instruction, a historical intention, and a corresponding slot to target devices corresponding to the at least two target device slots.

In a process of distributing information such as an execution instruction, a historical intention, and a corresponding slot to the at least two second electronic devices 52 (namely, the target device), the first electronic device 51 may first determine whether communication connection to the at least two second electronic devices 52 has been established.

If the communication connection is already established, the first electronic device 51 may further determine whether the communication connection to the at least two second electronic devices 52 is the same. Specifically, after associating, based on a type of the communication connection, information such as an execution instruction, a historical intention, and a corresponding slot that are sent to a same second electronic device 52, the first electronic device 51 sends the associated information such as the execution instruction, the historical intention, and the corresponding slot to the corresponding second electronic device 52.

For example, the first electronic device 51 is a mobile phone, and the second electronic device 52 includes a large screen device and a tablet. A user speech received by the mobile phone is "Recommend a song to the large screen device and the tablet". The mobile phone may extract two target device slots from the user speech. Entities of the two target device slots are respectively a "large screen device" and a "tablet", in other words, the second electronic device includes the large screen device and the tablet. The mobile phone may determine that a service needs to be transferred to the large screen device and the tablet, in other words, information such as an execution instruction, a historical intention, and a corresponding slot needs to be separately sent to the large screen device and the tablet.

In this case, the mobile phone detects that communication connection has been established to both the large screen device and the tablet, a type of the communication connection to the large screen device is Wi-Fi point-to-point connection, and a type of the communication connection to the tablet is Bluetooth connection. The mobile phone packetizes information such as an execution instruction, a historical intention, and a corresponding slot based on a Wi-Fi point-to-point protocol, and sends a data packet to the large screen device by using the Wi-Fi point-to-point connection, so as to send the information such as the execution instruction, the historical intention, and the corresponding slot to the large screen device. Similarly, the mobile phone packetizes information such as an execution instruction, a historical intention, and a corresponding slot based on a Bluetooth protocol, and then sends a data packet to the tablet by using the Bluetooth connection.

If no communication connection is established between the first electronic device 51 and the second electronic device 52, the first electronic device 51 may determine whether the first electronic device 51 has been paired with the second electronic device 52, and if the first electronic device 51 has been paired with the second electronic device 52, may send, based on locally stored related information about the second electronic device 52, a request for establishing connection to the second electronic device 52, so as to establish the communication connection to the second electronic device 52. After the communication connection is established, the first electronic device 51 sends information such as an execution instruction, a historical intention, and a corresponding slot to the second electronic device 52 based on a type of the communication connection. The related information about the second electronic device 52 may include, for example, a device identifier and an IP address.

For example, if the mobile phone detects that no connection is established between the mobile phone and the large screen device, but related information about the large screen device is stored locally, the mobile phone sends, to the large screen device based on information such as an IP address and a device identifier of the large screen device, a request for establishing Wi-Fi point-to-point connection. After receiving the request for establishing the Wi-Fi point-to-point connection, the large screen device may establish the Wi-Fi point-to-point connection to the mobile phone in response to the request.

If no communication connection is established between the first electronic device 51 and the second electronic device 52, and the first electronic device 51 is not pared with the second electronic device 52, the first electronic device 51 may prompt the user that no corresponding device is found.

For example, if the mobile phone detects that no connection is established between the mobile phone and the large screen device, and the mobile phone is not paired with the large screen device, the mobile phone may prompt, by using a prompt window or a prompt speech, the user that the large screen device cannot be found, and the user needs to establish connection to the large screen device.

Certainly, even if the first electronic device 51 is not paired with the second electronic device 52, the first electronic device 51 may obtain related information about the second electronic device 52, and may further initiate, to the second electronic device 52 based on the related information about the second electronic device 52, a request for establishing communication connection.

In addition, if the first electronic device 51 may extract at least two device slots from a user speech, and an entity of one of the two device slots is the source device, and an entity of another slot is not the source device, the first electronic device 51 determines that information such as an execution instruction, a historical intention, and a corresponding slot needs to be sent to a corresponding second electronic device 52 (in other words, a device corresponding to the another slot). In this case, after obtaining the execution instruction, the first electronic device 51 may execute the first execution instruction on the source device.

For example, a user speech collected by the mobile phone is "Play song A and recommend song A to the large screen device". The mobile phone may extract two device slots from the user speech. An entity of one device slot is the "source device", and an entity of the other device slot is the "large screen device". In this case, because the user speech includes the target device slot, and an entity of the target device slot is not the source device, it is determined that the information such as the execution instruction, the historical intention, and the corresponding slot needs to be sent to the large screen device.

The mobile phone may obtain, based on the user speech "Play song A and recommend song A to the large screen device", an execution instruction for playing song A and an execution instruction for recommending song A. After obtaining the execution instruction for playing song A, the mobile phone may automatically play song A. In addition, the mobile phone further sends information such as an execution instruction for recommending song A, a historical intention, and a corresponding slot to the large screen device.

It can be learned that in this embodiment of this application, the first electronic device 51 may determine, based on the user speech, whether information such as an execution instruction, a historical intention, and a corresponding slot needs to be sent to one or more second electronic devices 52.

In contrast, the first electronic device sends information such as an execution instruction, a historical intention, and a corresponding slot to each of the at least two second electronic devices by using one user speech, so as to connect a dialog service to a plurality of second electronic devices. This can improve convenience of service transfer and improve user experience.

For example, the user A wants to recommend song A to both user B and user C. A device of user A is a mobile phone, a device of user B is large screen device A, and a device of user C is large screen device B. The mobile phone, large screen device A, and mobile phone B all belong to a same group (for example, a family group or a friend group).

User A inputs the user speech "Recommend song A to large screen device A and large screen device B" to the mobile phone. The mobile phone may extract two target device slots from the user speech, and entities of the two target device slots are respectively "large screen device A" and "large screen device B". In this case, it may be determined that information such as an execution instruction, a historical intention, and a corresponding slot needs to be sent to each of large screen device A and large screen device B. Then, the mobile phone sends, to each of large screen device A and large screen device B, information such as an execution instruction, a historical intention, and a corresponding slot that are corresponding to the user speech "Recommend song A to large screen device A and large screen device B". In this case, the historical intention includes a music recommendation intention extracted from the user speech "Recommend song A to large screen device A and large screen device B", a corresponding slot includes a song name slot extracted from the user speech "Recommend song A to large screen device A and large screen device B", and an entity of the song name slot is song A.

After receiving information such as an execution instruction, a historical intention, and a corresponding slot from the mobile phone, large screen device A recommends song A to user B. Similarly, large screen device B recommends song A to user C. Compared with a case in which the user separately recommends a song to two users by using two voice commands, in this case, the user A may recommend the song to both large screen device A and large screen device B by using one voice command at the same time. This is more convenient and has better user experience.

If the first electronic device 51 cannot extract a target device slot from the user speech, the first electronic device 51 may determine that information such as an execution instruction, a historical intention, and a corresponding slot does not need to be sent to the second electronic device. In this case, after obtaining the execution instruction output by the first dialog management module 514, the first electronic device 51 executes the execution instruction, to obtain a corresponding execution result.

For example, in a scenario in FIG. 2A, FIG. 2B, FIG. 2C, and FIG. 2D, if the mobile phone 21 cannot extract a target device slot from the user speech "Hey Celia, recommend a song", the mobile phone 21 determines that information such as an execution instruction, a historical intention, and a corresponding slot does not need to be sent to the second electronic device 52. Therefore, after obtaining the execution instruction for playing a song, the mobile phone 21 automatically plays, in response to the execution instruction, a song corresponding to the song.

When the first electronic device 51 determines that information such as an execution instruction, a historical intention, and a corresponding slot needs to be sent to the second electronic device 52, in addition to transmitting the execution instruction to the second electronic device 52 (namely, the target device), the first electronic device 51 further transmits context information such as the historical intention and the corresponding slot to the second electronic device 52. Generally, the first electronic device 51 may transmit intentions of latest N rounds of dialogs and corresponding slots to the second electronic device 52. A value of N may be set according to an actual requirement. For example, N=1, N=3, or another value. In other words, the first electronic device 51 may transmit intentions of latest three rounds of dialogs and corresponding slots to the second electronic device 52.

The latest N rounds of dialogs may be N rounds of dialogs whose dialog occurrence time is closest to a current time point, in other words, the N rounds of dialogs that occur recently.

For example, a part of a dialog between the user and the voice assistant Celia on the mobile phone may be shown in Table 1.

**Table 1**

| Dialog occurrence time | User speech | Speech output by Celia | Intention of the user speech |
|---|---|---|---|
| 12:12 on June 6, 2021 | Hey Celia. How is the weather in Shenzhen today? | It's sunny and the temperature is high today. | Querying weather |
| | | Please pay attention to prevent heatstroke. | |
| 12:13 on June 6, 2021 | Recommend a song. | OK. | Recommending music |
| 12:14 on June 6, 2021 | Play the next song. | OK. | Recommending music |
| 20:15 on June 7, 2021 | Hey Celia, play song A. | OK. | Playing music |
| 20:20 on June 7, 2021 | Play song B. | OK. | Playing music |
| 20:30 on June 7, 2021 | Recommend song B to the large screen device. | OK. | Recommending music |

It is assumed that a current time point is 20:30 on June 7, 2021. After collecting "Recommend song B to the large screen device", the mobile phone extracts a target device slot from the user speech, and an entity of the target device slot is a "large screen device". In this case, it is determined that information such as an execution instruction and intentions of latest N rounds of dialogs needs to be sent to the large screen device.

In this case, if N=1, it is determined, based on a dialog occurrence time, that one round of dialog closest to a current time point is "Recommend song B to the large screen device". To be specific, the mobile phone transmits the execution instruction for recommending song B and intention information (namely, recommending music) of "Recommend song B to the large screen device" to the large screen device. Further, a song name slot extracted from the user speech may be further transmitted to the large screen device.

If N=2, it is determined, based on a dialog occurrence time, that two rounds of dialogs closest to a current time point are respectively "Recommend song B to the large screen device" and "Play song B". The mobile phone transmits, to the large screen device, intentions of the two rounds of dialogs and an execution instruction for recommending song B. In this case, a historical intention transmitted by the mobile phone to the large screen device may include playing music and recommending music.

If N=3, it is determined, based on a dialog occurrence time, that three rounds of dialogs closest to a current time point are respectively "Recommend song B to the large screen device", "Play song B", and "Hey Celia, play song A". The mobile phone may transmit, to the large screen device, intentions of the three rounds of dialogs and an execution instruction for recommending song B. In this case, a historical intention transmitted by the mobile phone to the large screen device includes playing music and recommending music.

Similarly, if N=4 or another value, the mobile phone may determine, based on a dialog occurrence time, N rounds of dialogs closest to a current time point, and transmit, to the large screen device, an intention of each of the N rounds of dialogs and an execution instruction for recommending song B.

It may be understood that when a quantity of rounds of historical dialogs is less than N, the first electronic device 51 may transmit all intentions of the historical dialogs and corresponding slots to the second electronic device 52. For example, when N=3, but there are only two rounds of historical dialogs, in other words, only two rounds of dialogs occur between the user and the device, intentions of the two rounds of dialogs are transmitted to the peer device.

In some other embodiments, the first electronic device 51 may alternatively transmit, to the second electronic device 52, all intentions of dialogs whose dialog occurrence times are after a target time point. The target time point may be a difference between a current time point and a preset time threshold. The preset time threshold may be set according to a requirement. For example, the preset time threshold is 24 hours, 12 hours, 6 hours, or 1 hour.

For example, dialog data shown in the foregoing Table 1 is used as an example. The preset time threshold is 24 hours, and the current time point is 20:30 on June 7, 2021. Based on the preset time threshold and the current time point, it may be determined that the target time point is 20:30 on June 6, 2021.

In this case, because all the occurrence times of the dialogs in Table 1 are after 20:30 on June 6, 2021, the mobile phone transmits, to the large screen device, the execution instruction for playing song B and the intentions of all the dialogs in Table 1.

For another example, if the preset time threshold is 1 hour, the target time point is 19:30 on June 7, 2021. In this case, dialogs whose dialog occurrence times are after 19:30 on June 7, 2021 include "Recommend song B to the large screen device", "Play song B", and "Hey Celia, play song A". The mobile phone may transmit both an execution instruction for playing song B and intentions of the three rounds of dialogs to the large screen device.

Certainly, in still some embodiments, the first electronic device 51 may transmit all historical dialogs to the large screen device. However, if there are a relatively large quantity of rounds of historical dialogs, a relatively large bandwidth may need to be occupied during transmission. As a result, a transmission delay is increased, and user experience is affected.

In contrast, the first electronic device 51 transmits, to the second electronic device 52 based on a dialog occurrence time, information such as intentions of N rounds of dialogs closest to the current time point, so that the second electronic device 52 can accurately identify an intention of a newly collected user speech based on information such as a transmitted past intention, and a transmission delay can be located in a proper area, thereby improving user experience.

Certainly, in some cases, if a bandwidth between the first electronic device 51 and the second electronic device 52 is very large, the first electronic device 51 may transmit information such as intentions of all historical dialogs to the second electronic device 52.

In still some embodiments, the first electronic device 51 may alternatively transmit an intention of a latest round of dialog and an associated intention together to the second electronic device 51. The associated intention is an intention associated with the intention of the latest round of dialog. For example, the latest round of dialog is "Recommend a song to the large screen device", and the intention of the latest round of dialog is recommending music. Intentions associated with recommending music include playing music and searching for music.

Further, in addition to transmitting an associated intention to the second electronic device 51, related information corresponding to the associated intention may be further transmitted to the second electronic device 51. For example, the associated intention is playing music, and related information corresponding to the associated intention may include a song name, singer information, and the like that are corresponding to the intention for playing music.

It should be noted that, in addition to transmitting the execution instruction to the second electronic device 52, the first electronic device 51 further transmits, to the second electronic device 52, information describing an intention of the user speech.

The information describing the intention of user speech may be specifically an intention. The first electronic device 51 extracts the intention from the user speech, and transmits the execution instruction and the intention together to the second electronic device 52. In a specific application, the first electronic device 51 may transmit intentions of latest N rounds of dialogs to the second electronic device 52.

In this case, after the second electronic device 52 collects a user speech, the second semantic understanding module 523 may identify an intention of the user speech based on an intention sent by the first electronic device 51 and text information that is of the user speech and that is output by the second speech recognition module.

The information describing the intention of the user speech may be a corpus. The first electronic device 51 does not transmit, to the second electronic device 52, the intention extracted from the user speech, but transmits the dialog corpus to the second electronic device 52. The dialog corpus refers to a text of the user speech. After collecting the user speech, the first electronic device 51 converts the user speech into a text by using the speech recognition module, to obtain a dialog corpus. In a specific application, the first electronic device 51 may transmit a dialog corpus of the latest N rounds of dialogs to the second electronic device 52. For example, dialog data in Table 1 is used as an example, N=3, and the dialog corpus transmitted by the first electronic device 51 to the second electronic device 52 includes a text of "Recommend song B to the large screen device", a text of "Play song B", and a text of "Hey Celia, play song A".

In this case, after the second electronic device 52 collects a user speech, the second semantic understanding module 523 may identify an intention of the user speech based on the corpus sent by the first electronic device 51 and text information that is of the user speech and that is output by the second speech recognition module.

For example, the dialog corpus sent by the first electronic device 51 to the second electronic device 52 includes "Recommend a song to the large screen device", and a user speech newly collected by the second electronic device 52 is "Switch". The second semantic understanding module 523 outputs an intention of the user speech "Switch" based on the input dialog corpus "Recommend a song to the large screen device" and a text "Switch" of the user speech. The intention of the user speech "Switch" is recommending music, and the intention includes a slot for switching a playlist.

Alternatively, the second semantic understanding module 523 of the second electronic device 52 may first extract the intention from the corpus sent by the first electronic device 51, and then identify an intention of the user speech based on the newly collected user speech and the intention extracted from the dialog corpus.

For example, the dialog corpus sent by the first electronic device 51 to the second electronic device 52 is "Recommend a song to the large screen device", and the user speech newly collected by the second electronic device 52 is "Switch". The second semantic understanding module 523 may first extract an intention "recommending music" from the dialog corpus "Recommend a song to the large screen device". Then, the second semantic understanding module 523 outputs an intention of the user speech "Switch" based on the input intention "recommending music" and the text "Switch" of the user speech.

The information describing the intention of the user speech may alternatively include both the intention and the dialog corpus. To be specific, when transmitting the execution instruction, the first electronic device 51 transmits both dialog intentions of latest N rounds of dialogs and the dialog corpus to the second electronic device 52.

In this case, the second semantic understanding module 523 of the second electronic device 52 may select, according to a requirement, the intention or the dialog corpus sent by the first electronic device 51 to perform intention identification.

Further, to improve accuracy of intention identification of the second electronic device 52 and implement more open cross-device dialog connection, when sending an execution instruction to the second electronic device 52, the first electronic device 51 may transmit target information to the second electronic device 52, in addition to transmitting, to the second electronic device 52, information describing an intention of a user speech.

The target information may be set according to a requirement. For example, the target information may include a slot. The slot may include a slot corresponding to an intention. The first electronic device 51 may extract an intention and a slot corresponding to the intention from the user speech. For example, an intention "recommending music" and a song name slot may be extracted from a user speech "Recommend song A to the large screen device", and an entity of the song name slot is song A.

In addition to the slot corresponding to the intention, the slot may further include a target device slot. To be specific, in addition to transmitting the slot corresponding to the intention to the second electronic device 52, the first electronic device 51 may further transmit the target device slot to the second electronic device 52. For example, for a user speech "Recommend song A to the large screen device", a slot corresponding to "recommending music" that is a song name slot is included, and a target device slot is further included. In this case, the song name slot and the target device slot are transmitted to the second electronic device 52 together.

It may be understood that, if the first electronic device 51 may extract at least two target device slots from the user speech, when transmitting the target device slots, the first electronic device 51 may transmit the corresponding target device slots to corresponding second electronic devices 52.

For example, the mobile phone extracts two target device slots from the user speech "Recommend a song to the large screen device and the tablet", and the mobile phone may transmit, to the large screen device, a target device slot corresponding to the large screen device, and transmit a target device slot of the tablet to the large screen device.

Certainly, if the first electronic device 51 transmits a dialog corpus to the second electronic device 52 together, the second electronic device 52 may directly extract, from the dialog corpus, a slot corresponding to an intention and/or a target device slot. In this way, the first electronic device 51 may not need to transmit the slot to the second electronic device 52.

The target information may include user information such as user profile information and real-time location information of the user. For example, the user profile information includes information such as a user gender, user preference information, and a user occupation. The first electronic device 51 may generate a user profile based on collected user information.

The second electronic device 52 may determine personal related information such as user preference and an occupation based on user information sent by the first electronic device 51, and may provide a more personalized service for the user based on the personal related information. For example, if the first electronic device 51 and the second electronic device 52 use a same user account, the second electronic device 52 may recommend, to the user based on user information transmitted by the first electronic device 51, a song that meets user preference and meets a user occupation. The target information may further include scenario information, and the scenario information describes a scenario in which the user is currently located. The second electronic device 52 may learn a current scenario of the user based on information about a scenario in which the user is located, for example, a location at which the user is currently located or a scenario in which the user is currently located. In addition, the second electronic device 52 may provide a more personalized and accurate service for the user based on the scenario information, so as to implement more open cross-device dialog service connection.

For example, the first electronic device 51 determines, by using acceleration information collected by an acceleration sensor integrated into the first electronic device 51, that the user is in a walking state, and transmits information indicating that the user is currently in the walking state to the second electronic device 52. The second electronic device 52 may learn that the user is currently walking, in other words, determine that the user is in a sports scenario; and then, when recommending a song to the user, may recommend a song for the sports scenario to the user.

For another example, if the first electronic device 51 and the second electronic device 52 are devices in which a same user account is logged in to, in a song recommendation scenario, the second electronic device 52 determines, based on real-time location information of the user, that the user is currently at home, and then recommends a song that meets user preference to the user. The target information may further include application status information. The application status information is related information about a target application, and the target application is usually an application running in a foreground. For example, the mobile phone is playing music, and the target application is a music application. Certainly, the target application may alternatively not be an application running in the foreground.

The related information about the target application may be set according to an actual application scenario. For example, in a music playing scenario, the target application is a music application, and related information about the target application may include a user playing record, where the user playing record includes information such as a song name and a playing time. The first electronic device 51 transmits information such as a song name to the second electronic device 52. After collecting a user speech, the second electronic device 52 may identify the song name in the user speech based on information such as a song name. For another example, in a navigation scenario, the target application includes a schedule application and a navigation application, and related information about the target application may include user schedule information, user navigation history record information, and the like. The first electronic device 51 transmits information such as a user schedule and a navigation history record to the second electronic device 52. After collecting a user speech, the second electronic device 52 may identify, based on the information, location information in the user speech.

It can be learned from the foregoing that the second electronic device 52 may more accurately identify a newly collected user speech based on the application status information, so as to implement more open cross-device dialog service connection. In addition, in some cases, the second electronic device 52 may further provide a more personalized and accurate service for the user based on the application status information. For example, the application status information includes historical playing information of a song, and the second electronic device 52 may recommend, to the user based on the historical playing information of the song, a song that better meets user preference.

The application status information transmitted by the first electronic device 51 to the second electronic device 52 may be information associated with an intention of a latest round of dialog. For example, an intention of the latest round of dialog is recommending music, at least two music applications are installed on the mobile phone, and application status information associated with recommending music includes related information about the at least two music applications. The at least two music applications may be in a running state at the same time, or may not be in a running state.

The related information about the target application may further include an identifier of a foreground application or a running application. The second electronic device 52 determines, based on the identifier of the application, whether a same application exists locally, and if a same application exists locally, uses the same application to execute the first execution instruction, and if a same application does not exist locally, uses a similar application to execute the execution instruction.

For example, in a music recommendation scenario, both the mobile phone and the large screen device include a plurality of music applications for playing music. In this case, the music applications installed on the mobile phone include Huawei Music, application 1, and application 2.

At a specific moment, the mobile phone is playing a song by using Huawei Music. If the mobile phone collects a user speech "Recommend a song to the large screen device", the mobile phone generates an execution instruction for recommending music corresponding to the user speech, and transmits the execution instruction for recommending music, a historical intention, a corresponding slot, and application status information to the large screen device. The application status information includes an application identifier of Huawei Music. The application status information includes related information about three music applications: Huawei Music, application 1, and application 2, for example, a playing record, a song name, and a user favorite song.

After receiving the application status information, the large screen device first determines, based on the application identifier of Huawei Music, whether Huawei Music is installed locally. If Huawei Music is installed locally, the voice assistant of the large screen device responds to the execution instruction for recommending music, and uses local Huawei Music to play a corresponding song. If Huawei Music is not installed locally, the large screen device may play a corresponding song by using another music application.

In contrast, the first electronic device 51 transmits the application status information to the second electronic device 52, and the second electronic device 52 may preferentially execute, based on the application status information, the first execution instruction by using an application that is the same as the target application, so that service transferring is more natural and is not abrupt, and user experience is better.

It should be noted that the target information may include any one or any combination of a slot, user information, scenario information, and application status information.

To be specific, in some embodiments, when transferring a service to the second electronic device 52, the first electronic device 51 may transmit, to the second electronic device 52, an execution instruction and information describing an intention of a user speech, so that the second electronic device 52 can accurately identify a user speech and implement cross-device dialog service connection. In some other embodiments, further, to make intention identification accuracy of the second electronic device 52 higher and implement more open cross-device dialog service connection, the first electronic device 51 may transmit an execution instruction, information describing an intention of a user speech, and target information to the second electronic device 52 together. FIG. 5 shows an example of information sent by the first electronic device 51 to the second electronic device 52, including an execution instruction, a historical intention, a corresponding slot, and the like.

In a specific application, when the first electronic device 51 sends an execution instruction to the second electronic device 52, more information carried in the execution instruction may indicate a higher occupied bandwidth. However, a bandwidth between the first electronic device 51 and the second electronic device 52 cannot be unlimitedly large. Therefore, if too much information is carried, a transmission delay may be increased, and user experience may be affected. In view of this, information carried when the execution instruction is sent may need to be selected. The second electronic device 52 receives information from the first electronic device 51 by using the second instruction interaction service 525, where the information includes, for example, information such as an execution instruction, a historical intention, and a corresponding slot. Then, the second electronic device 52 transfers the execution instruction to the second application 521, and the second application 512 may respond to the execution instruction. In addition, the second electronic device 52 further locally stores the received information such as the historical intention and the corresponding slot.

In some embodiments, after receiving the execution instruction from the first electronic device 51, the second electronic device 52 may automatically wake up a voice assistant of the source device. In this way, the user may not wake up the voice assistant on the second electronic device by using a wakeup word, and the user may directly input a corresponding user speech to the second electronic device 52, so that cross-device dialog service connection is smoother, and user experience is better.

Certainly, in some other embodiments, after receiving the execution instruction of the second electronic device 51, alternatively, the second electronic device 52 may not automatically wake up a voice assistant of the source device, but wakes up the voice assistant of the source device after collecting a specific wakeup word input by the user.

It should be noted that, after the second electronic device 52 receives context information such as a historical intention and a corresponding slot from the first electronic device, the second semantic understanding module 523 may put the context information sent by the first electronic device 51 into a historical context of the second electronic device 52, and use the context information sent by the first electronic device 51 as a latest context. In this way, when collecting a new user speech, the second electronic device 52 may identify an intention of the newly collected user speech based on latest context information.

For example, the context information may include a historical intention, a corresponding slot, and a dialog corpus, may include a historical intention and a corresponding slot, or may include a historical intention and a dialog corpus.

Alternatively, after receiving the context information from the first electronic device 51, the second electronic device 52 may create a new dialog based on the received context information. The new dialog includes information such as a historical intention, a corresponding slot, and a dialog corpus that are sent by the first electronic device 51. In this way, when the second electronic device 52 collects a new user speech, the second semantic understanding module 523 may accurately identify an intention of the newly collected user speech based on a dialog creation time and by using information included in the newly created dialog.

Alternatively, the second electronic device 52 may set a priority of the received context information to a highest priority. In this way, when the second electronic device 52 collects a new user speech, the second semantic understanding module 523 may accurately identify an intention of the newly collected user speech based on the context information of the highest priority.

It should be further noted that, after receiving the execution instruction sent by the first electronic device 51, the second electronic device 52 may first determine whether there is an ongoing task currently, and if there is no ongoing task currently, the second electronic device 52 may execute the execution instruction sent by the first electronic device 51. If there is an ongoing task currently, the execution instruction sent by the first electronic device 51 may be executed after execution of the current task is completed, or a remaining time of the current task may be further determined. If the remaining time is less than a specific threshold, the execution instruction sent by the first electronic device 51 may be executed after execution of the current task is completed; if the remaining time is not less than the specific threshold, the current task may be interrupted, and the execution instruction sent by the first electronic device 51 is executed. In this way, the dialog service may be connected in a more timely manner, and user experience is better.

After the second application 521 obtains a corresponding execution result in response to the execution instruction, the dialog service is transferred from the first electronic device 51 to the second electronic device 52. Then, after collecting the user speech, the second electronic device 52 may accurately identify the intention of the user speech based on information such as a historical intention and a slot that are transmitted by the first electronic device 51.

After the second electronic device 52 collects a user speech, the second application 521 inputs the user speech to the second speech recognition module 522, to obtain text information output by the second speech recognition module 522; and then inputs, to the second semantic understanding module 523, the text information output by the second speech recognition module 522. The second semantic understanding module 523 extracts an intention and a slot of the user speech based on the text information output by the second speech recognition module 522, and information such as a historical intention and a slot transmitted by the first electronic device 51. Finally, semantic information output by the second semantic understanding module 523 is input to the second dialog management module 524, to obtain an execution instruction. After obtaining the execution instruction output by the second dialog management module 524, the second application 521 obtains an execution result corresponding to the execution instruction in response to the execution instruction. The second dialog management module 52 may select required information according to a requirement to generate a corresponding execution instruction.

For example, in a music recommendation scenario, the second dialog management module 524 outputs an execution instruction for recommending a song. In this case, an input to the second dialog management module 524 may include semantic information and the like. After receiving an execution instruction for recommending song, a music application may determine, based on user information, application status information, and the like that are from the first electronic device 51, that a recommended song is song A.

In other words, the execution instruction output by the second dialog management module 524 does not include information about the recommended song, but the music application determines the recommended song.

In some other embodiments, the second dialog management module 524 may output an execution instruction for recommending song A. In this case, an input to the second dialog management module 524 may include semantic information and a name of the recommended song. The name of the recommended song may be determined by the system based on user information, application status information, and the like that are from the first electronic device 51. After receiving the execution instruction for recommending song A, the music application automatically recommends song A without performing a recommendation operation.

In other words, the execution instruction output by the second dialog management module 524 includes information about the recommended song.

Similarly, an execution instruction output by the first dialog management module 514 on the side of the first electronic device 51 may include information about a recommended song, or may not include information about a recommended song.

If information transmitted by the first electronic device 51 to the second electronic device 52 includes target information, the second electronic device 52 may provide a more personalized and more accurate service for the user based on the target information, thereby implementing more open cross-device dialog service connection and improving user experience.

For example, in a song recommendation scenario, the second electronic device 52 recommends, to the user based on user occupation information and real-time location information of the user in the user information, a song that better conforms to a user identity and a current location. Specifically, the second electronic device 52 determines, based on the user occupation information, that an occupation of the user is a teacher; and determines, based on the real-time location information of the user, that the user is currently located at a school. Based on the occupation of the user and the location at which the user is currently located, the second electronic device 52 recommends a children's song to the user. In this case, user accounts of the first electronic device 51 and the second electronic device 52 do not belong to a same user.

Alternatively, if the second electronic device 52 determines, based on the real-time location information of the user, that the user is currently located at home. Based on a location at which the user is currently located, the second electronic device 52 recommends, to the user, a song that meets user preference. In this case, user accounts of the first electronic device 51 and the second electronic device 52 belong to a same user. It can be learned from the foregoing that, when a service needs to be transferred from the first electronic device 51 to the second electronic device 52, the first electronic device 51 transfers information such as an execution instruction, a historical intention, and a slot to the second electronic device 52, so that the second electronic device 52 may identify an intention of a user speech based on the information such as the historical intention and the slot that are transferred by the first electronic device 51, thereby implementing cross-device dialog service connection.

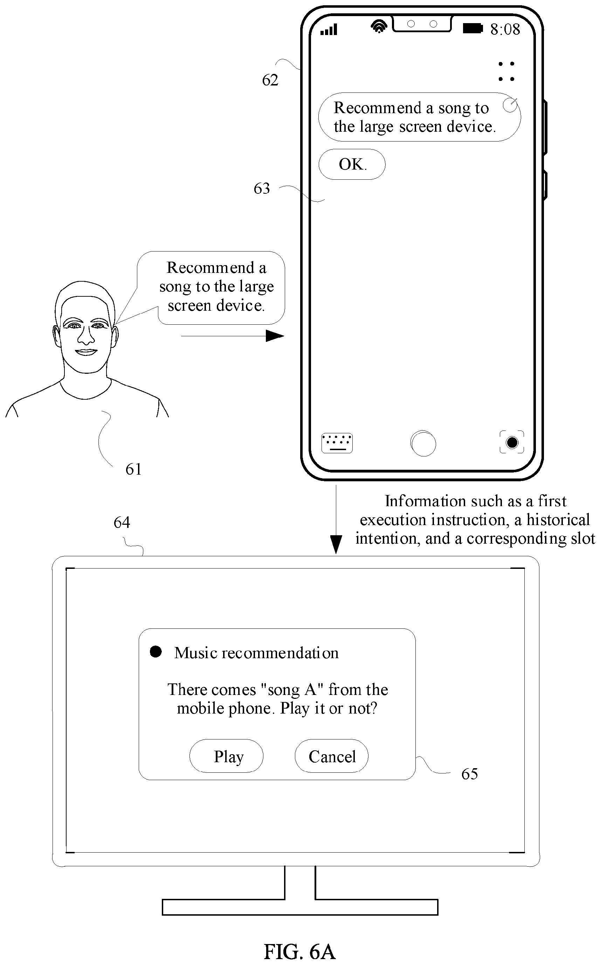

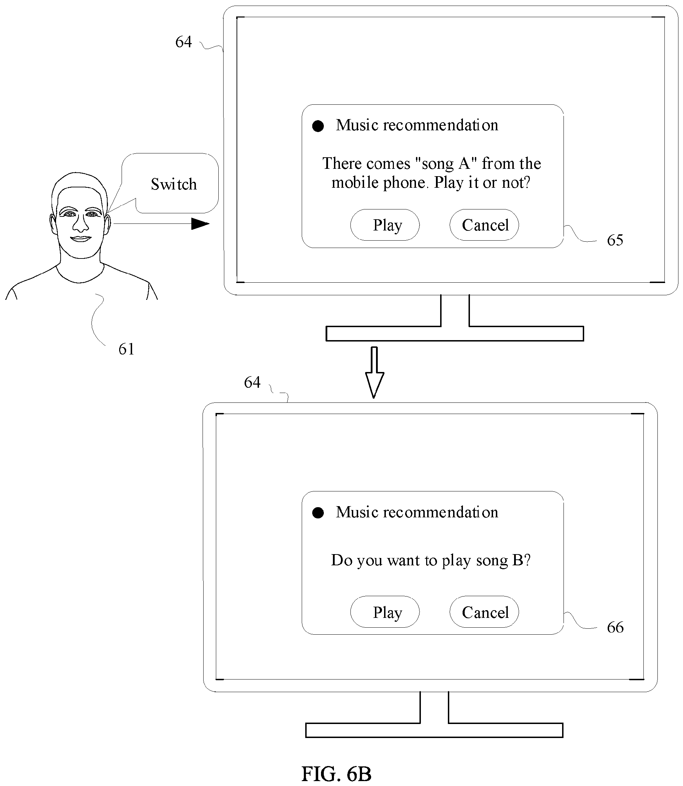

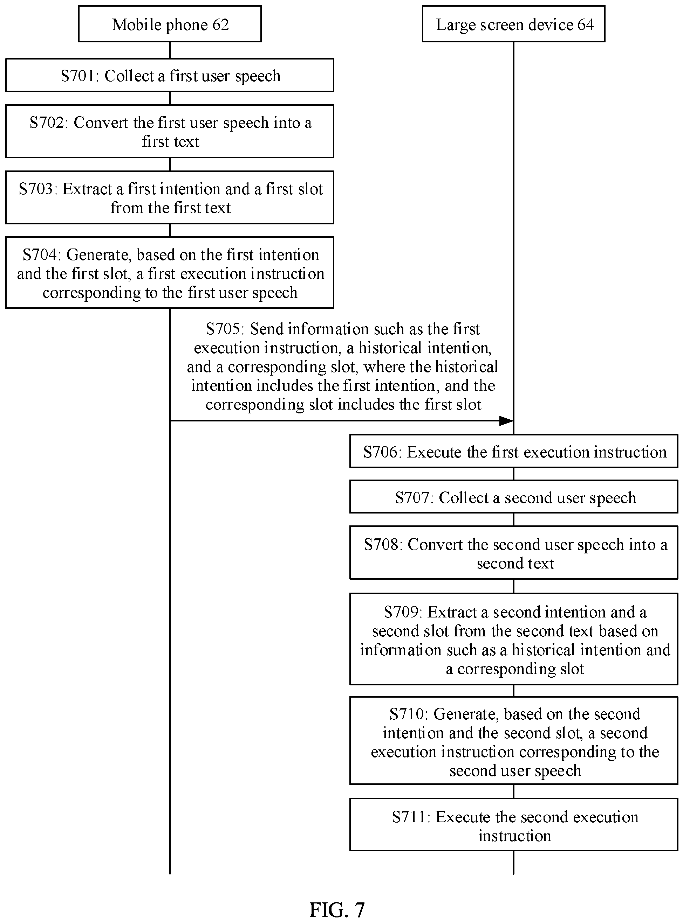

For example, with reference to FIG. 6A, FIG. 6B, and FIG. 7, the following describes a scenario in which the mobile phone recommends music to the large screen device. FIG. 6A and FIG. 6B are schematic diagrams of a scenario in which a mobile phone recommends music to a large screen device according to an embodiment of this application. FIG. 7 is a schematic flowchart of recommending music by a mobile phone to a large screen device according to an embodiment of this application.

As shown in FIG. 6A and FIG. 6B, the first electronic device is a mobile phone 62, and the second electronic device is a large screen device 64. A voice assistant is installed and the speech service system corresponding to FIG. 1 is deployed in each of the mobile phone 62 and the large screen device 64.

As shown in FIG. 7, the process may include the following steps.

Step S701: The mobile phone 62 collects a first user speech of a user 61.

In this case, the first user speech is specifically "Recommend a song to the large screen device".

For example, the user 61 wakes up the voice assistant of the mobile phone 62 by using a specific wakeup word. Then, the user 61 says "Recommend a song to the large screen device" to the voice assistant of the mobile phone 62, and the mobile phone 62 collects speech data "Recommend a song to the large screen device" by using a sound collection apparatus such as a microphone.

Step S702: The mobile phone 62 converts the first user speech into a first text.

It may be understood that the speech service system corresponding to FIG. 1 or some modules of the speech service system are deployed in the mobile phone 62.

FIG. 5 is used as an example. The mobile phone 62 includes a first speech recognition module 512, a first semantic understanding module 513, and a first dialog management module 514. After the mobile phone 62 collects the first user speech "Recommend a song to the large screen device", the voice assistant of the mobile phone 62 inputs the first user speech to the first speech recognition module 512, and the first speech recognition module 512 converts the first user speech into the first text "Recommend a song to the large screen device".

Step S703: The mobile phone 62 extracts a first intention and a first slot from the first text.

The first slot is a slot configured in the first intention.

For example, after obtaining the first text "Recommend a song to the large screen device", the first speech recognition module 512 inputs the first text "Recommend a song to the large screen device" to the first semantic understanding module 513. The first semantic understanding module 513 performs semantic understanding on the first text, and outputs the first intention and the first slot. In this case, the first intention is recommending music, and the first slot includes a target device slot. In this case, an entity of the target device slot is the large screen device 64. Certainly, in addition to the target device slot, the first slot may further include another slot. For example, if the user speech includes a song name, the first slot includes a song name slot.

As shown in FIG. 6A, after identifying the intention of the first user speech, the mobile phone 62 may display a voice assistant interface 63. The first text "Recommend a song to the large screen device" and an answer text "OK" for the first user speech are displayed in the voice assistant interface 63.

When the first slot includes the target device slot, and the entity of the target device slot is not the mobile phone 62, the mobile phone 62 determines that information such as an execution instruction, a historical intention, and a corresponding slot needs to be sent to the large screen device 64.

Step S704: The mobile phone 62 generates, based on the first intention and the first slot, a first execution instruction corresponding to the first user speech.

For example, after obtaining the first intention and the first slot, the first semantic understanding module 513 inputs information such as the first intention and the first slot to the first dialog management module 514. The first dialog management module 514 outputs the first execution instruction based on the information such as the first intention and the first slot. In this case, the first execution instruction is an instruction used to recommend music.

Step S705: The mobile phone 62 sends information such as the first execution instruction, a historical intention, and a corresponding slot to the large screen device 64. The historical intention includes the first intention, the corresponding slot is a slot corresponding to the historical intention, and the slot includes the first slot. The first slot may include a target device slot, or may not include a target device slot.

It should be noted that, in addition to the first user speech, if another historical dialog is further included, the historical intention includes an intention corresponding to the another historical dialog. For example, the historical intention includes intentions of latest three rounds of dialogs, and each round of dialog has a corresponding intention. In this case, only one round of dialog is performed between the mobile phone 62 and the user 61, and the historical intention may include only the first intention. Correspondingly, the corresponding slot includes the first slot corresponding to the first intention.

In addition to the first execution instruction, the historical intention, and the corresponding slot, the mobile phone 62 may further transfer a dialog corpus, user information, scenario information, application status information, and the like to the large screen device 64. For example, information transmitted by the mobile phone 62 to the large screen device 64 may be shown in Table 2.

**Table 2**

| Sequence number | Corpus | Intention | Slot |
|---|---|---|---|
| 102 | Recommend a song to the large screen device | Recommending music | Large screen device |

More specifically, information transmitted by the mobile phone 62 to the large screen device 63 may be as follows:

```
i. "contexts": {
                1. "nluResult": [
               2. {
                    i. "intentNumber": "102",
                    ii. "intentName": "PLAY_MUSIC",
                    iii. "slots": {
                        1. "deviceName": "deviceB"
                    b) }
                    c) "orgAsrText": {
                         i. "text": "Recommend a song to the large screen device"
                    d) }
                3. },
               4. {
                5. "intentNumber": "101",
                6....
                7. }]
           ii. }
```

nluResult is an intention identification result, and in this case, is specifically an intention identification result on a side of the mobile phone 62, and the intention identification result includes an intention and a slot. intentNumber indicates an intention sequence number, and intentName indicates an intention name. In this case, the intention name is recommending music. slots indicates a slot. In this case, a name of the slot is a device name, and a specific parameter of the slot is device B. In this case, device B is specifically the large screen device 64.

orgAsrText refers to text information output by the speech recognition module, and is specifically a speech recognition result on a side of the mobile phone 62 herein. The text information is specifically "Recommend a song to the large screen device".

In other words, the information sent by the mobile phone 62 to the large screen device 64 may include the first execution instruction, the historical intention, the slot corresponding to the historical intention, information about the dialog corpus, the user information, the scenario information, the application status information, and the like. Herein, the dialog corpus includes a corpus "Recommend a song to the large screen device". In this case, an application running in a foreground of the mobile phone 62 is a music application, the application status information may include information such as a user playing record, the user information may include information such as a user profile and a real-time user location, and the scenario information may include information representing user walking.

When transferring a service to the large screen device 64, the mobile phone 62 synchronizes information such as a historical intention and a corresponding slot to the large screen device 64. In this way, in a subsequent dialog, the large screen device 64 may identify an intention of a newly input user speech based on the information such as the historical intention and the slot that are synchronized by the mobile phone 62, to implement cross-device dialog connection.

Step S706: The large screen device 64 executes the first execution instruction.

For example, after receiving the first execution instruction, the large screen device 64 transfers the first execution instruction to the voice assistant of the large screen device 64, and the voice assistant of the large screen device 64 obtains a corresponding execution result in response to the first execution instruction. As shown in FIG. 6A, the large screen device 62 executes the first execution instruction, and displays a window 65 in an interface. Prompt information is displayed in the window 65, and is used to prompt the user whether to play song A recommended by the mobile phone. In addition, two option buttons "Play" and "Cancel" are further displayed in the window 65.

Step S707: The large screen device 64 collects a second user speech of the user 61.

As shown in FIG. 6B, after the large screen device 64 displays the window 65, the user 61 inputs the second user speech to the large screen device 64. In this case, the second user speech is specifically "Switch".

In this case, after receiving the first execution instruction, the large screen device 64 may automatically wake up the voice assistant of the source device. In this way, the user may directly input the second user speech to the large screen device, and does not need to wake up the voice assistant of the large screen device 64 by using a specific wakeup word.

Step S708: The large screen device 64 converts the second user speech into a second text.

It may be understood that the speech service system corresponding to FIG. 1 or some modules of the speech service system are deployed in the large screen device 64.

FIG. 5 is used as an example. The large screen device 64 includes a second speech recognition module 522, a second semantic understanding module 523, and a second dialog management module 524. After the large screen device 64 collects the second user speech "Switch", the voice assistant of the large screen device 64 inputs the second user speech to the second speech recognition module 522, and the second speech recognition module 522 converts the second user speech into the second text "Switch".

Step S709: The large screen device 64 extracts a second intention and a second slot from the second text based on information such as a historical intention and a corresponding slot.

For example, after obtaining the second text "Switch", the second speech recognition module 522 inputs the second text "Switch" to the second semantic understanding module 523. The second semantic understanding module 523 performs semantic recognition based on information such as the second text "Switch" and the historical intention "recommending music", to obtain the second intention and the second slot. In this case, the second intention is recommending music, and the second slot may include a device slot and a slot for switching a playlist. In this case, an entity of the device slot is the large screen device 64. Because a target device is not included in "Switch", the entity of the device slot is the source device by default. Alternatively, the second slot may not include a device slot. In this case, the second execution instruction is executed on the source device by default.

The large screen device 64 may identify, based on information such as a historical intention "recommending music" from the mobile phone 62, that an intention of "Switch" is "recommending music", in other words, the intention of "Switch" inherits the historical intention "recommending music".

It should be noted that, if the second user speech includes an explicit intention, the large screen device 64 may identify an intention of the second user speech without information such as the historical intention from the mobile phone. For example, the second user speech is "Play song A", and the user speech specifies an intention "playing music". The large screen device 64 may identify, without the historical intention "recommending music" from the mobile phone 62, that an intention of "Play song A" is "playing music".

If the second user speech does not include an explicit intention, and the large screen device 64 still cannot identify the intention of the user speech based on the historical intention "recommending music" from the mobile phone 62, the large screen device 64 may send an interactive speech to the user "I don't understand what you mean. Please give me more time to learn your habits".

When performing semantic understanding on the second text, the large screen device 64 may select corresponding information according to a requirement. For example, the large screen device 64 may perform semantic understanding on the second text only based on the historical intention, or may perform semantic understanding on the second text based on the historical intention and a corresponding slot. Certainly, if the mobile phone 62 further transmits one or more of the user information, the application status information, the dialog corpus, and the scenario information to the large screen device 64, the large screen device 64 may alternatively perform semantic understanding based on the information. For example, the large screen device 64 may perform semantic understanding on the second text based on the historical intention, the dialog corpus, the corresponding slot, and song name information in the application status information.

Step S710: The large screen device 64 generates, based on the second intention and the second slot, a second execution instruction corresponding to the second user speech.

For example, after obtaining the second intention and the second slot, the second semantic understanding module 523 inputs the second intention and the second slot to the second dialog management module 524. The second dialog management module 524 generates the second execution instruction based on the second intention and the second slot. In this case, the second execution instruction is an instruction for recommending music.

Step S711: The large screen device 64 executes the second execution instruction.

For example, after obtaining the second execution instruction output by the second dialog management module 524, the voice assistant of the large screen device 64 obtains a corresponding execution result in response to the second execution instruction.

As shown in FIG. 6B, the large screen device 64 executes the second execution instruction, and displays a window 66. Prompt information is displayed in the window 66, and is used to ask the user whether to play song B. Song B is a recommended song determined by the large screen device 64 according to a recommendation rule.

Certainly, in some other embodiments, before playing song B, the large screen device may alternatively prompt, by using a speech, the user that song B is to be played. For example, speech prompt information is "OK, I'll play song B for you".

Alternatively, after determining that song B needs to be played, the large screen device may directly play song B without prompting the user.

In contrast, this embodiment of this application provides prompt information (for example, a prompt window or a prompt speech) for executing the second execution instruction, so that cross-device dialog service connection may not be abrupt, and is more user-friendly, and user experience is better.

It should be noted that, in addition to the historical intention and the corresponding slot, the information transferred by the mobile phone 62 to the large screen device 64 may further include other information. Based on the information, the large screen device 64 may more accurately identify an intention of the user speech, thereby implementing more open cross-device dialog connection. A more personalized and more accurate service may be further provided based on the user, so as to improve user experience.

For example, if the user 61 does not like song B recommended by the large screen device 64, the user 61 inputs a third user speech "Switch to xxxx" to the large screen device 64 again, where "xxxx" is a song name. After receiving the third user speech, the large screen device 64 may identify, based on a playing history of a music application that is sent by the mobile phone 62, that "xxxx" is a song name, so as to accurately identify that an intention of the third user speech is recommending music. The playing record includes information such as a song name.

It should be noted that the song that the user 61 wants to play may be a new song, and the large screen device 64 does not have information about the song. If the playing history of the music application on the mobile phone 62 is not transferred to the large screen device 64, the large screen device 64 may not identify that "xxxx" is a song name, and therefore cannot identify the intention of the third user speech.

If a login account of the first electronic device and a login account of the second electronic device are a same user account, the second electronic device may provide a service for the user based on the user information, the application status information, and the like that are transmitted by the first electronic device.

For example, in the scenarios in FIG. 6A to FIG. 6B, in the mobile phone 62 and the large screen device 64, a same Huawei user account is logged in to. Information transmitted by the mobile phone 62 to the large screen device 64 includes the first execution instruction, the historical intention, the corresponding slot, the user information, the scenario information, and the application status information. The user information includes user profile information and real-time location information of the user. The application status information includes related information about a music application on the mobile phone 62. The scenario information includes information representing user walking.

After receiving a user speech "Switch", the large screen device 64 identifies, based on information such as a historical intention sent by the mobile phone 62, that an intention of the user speech "Switch" is "recommending music", and generates, based on the intention "recommending music", the user information, the scenario information, the application status information, and the like, the second execution instruction used to recommend music.

The large screen device 64 determines, based on the user information and the application status information that are sent by the mobile phone 62, that the recommended song is song B, and generates the second execution instruction used to recommend song B.

Specifically, the large screen device 64 may learn, based on the user profile information in the user information, that a user of the mobile phone 62 and the large screen device 64 is a teacher, and a preferred song type of the user is pop music; and may learn, based on the real-time location information in the user information, that the user is currently located at home. In addition, the large screen device 64 may further determine, based on the scenario information in the user information, that the user is currently in a walking state, in other words, a scenario in which the user is currently located is a sports scenario. In this case, because the user is in the sports scenario, a song for the sports scenario is recommended to the user. In addition, because the user is at home, a song that meets user preference is recommended to the user. To be specific, when a song is recommended to the user, a song that is for a sports scenario and that meets user preference needs to be considered. Further, the large screen device 64 further determines, based on information such as a playing history of the user in the application status information, a to-be-selected song set whose quantity of playing times of the user in last seven days is greater than a preset quantity threshold. Finally, the large screen device 64 selects one or more pop songs for the sports scenario from the to-be-selected song set as a recommended song. In this case, song B is determined as the recommended song. Optionally, if the login account of the second electronic device and the login account of the second electronic device are not a same user account, the first electronic device may not need to send the user information and the scenario information to the second electronic device. For example, when distributing information such as the first execution instruction, the historical intention, and the corresponding slot to the second electronic device, the first electronic device determines that the second electronic device and the first electronic device are not electronic devices of a same user, and does not send personal related information such as user information and scenario information that are recorded by the source device. In this case, the second electronic device may provide a service for the user based on the user information and the scenario information that are recorded by the source device.

For example, scenarios in FIG. 6A to FIG. 6B are still used as an example. In the mobile phone 62 and the large screen device 64, different Huawei user accounts are logged in to. In this case, the login account of the mobile phone 62 is an account of user A, and the login account of the large screen device 64 is an account of user B.

Information transmitted by the mobile phone 62 to the large screen device 64 includes the first execution instruction, the historical intention, and the corresponding slot. After receiving the user speech "Switch", the large screen device 64 identifies, based on information such as the historical intention sent by the mobile phone 62, that the intention of the user speech "Switch" is "recommending music", and generates, based on the intention "recommending music", the application status information of the source device, the user information, and the like, the second execution instruction used to recommend music.

In response to the second execution instruction used to recommend song E, the large screen device 64 determines, based on the user information of the source device and the scenario information of the source device, that a recommended song is song E.

Specifically, the large screen device 64 determines, based on positioning information in the scenario information of the source device, that a current location is a school. In addition, it is determined, based on the user information of the source device, that the user of the large screen device 64 is a teacher or a school. In view of this, when recommending a song, the large screen device 64 recommends a song that better meets a student identity and a student preference, for example, recommends a children's song.

Certainly, when the first electronic device 51 determines that a user account that is logged in to for the second electronic device does not belong to a same user as the source device, the first electronic device 51 may alternatively transmit the application status information and the user information of the source device to the second electronic device. When providing a service for a user, the second electronic device 52 may use only a part of the application status information or the user information from the first electronic device 51 as basis information for providing the service. It can be learned from comparison that, the mobile phone 62 transmits the application information, the user information, and the like to the large screen device 64 together, so that the large screen device 64 may recommend a best song (to be specific, recommend song B at home, and recommend song E at school) to the user based on the application information and the user information sent by the mobile phone 62, so as to provide a more personalized and accurate service for the user and improve user experience.

It can be learned from the foregoing that the mobile phone 62 synchronizes information such as a historical intention and a corresponding slot to the large screen device 64, and the large screen device 64 accurately identifies an intention of a newly collected user speech based on the information synchronized by the mobile phone 62, to implement cross-device dialog service connection.

It should be noted that, in the scenarios shown in FIG. 6A, FIG. 6B, and FIG. 7, when some key information is missing in a user speech, the mobile phone 62 may perform one or more rounds of dialogs with the user 61, to collect required information. For example, there are two large screen devices, one is a large screen device in a living room, and the other is a large screen device in a bedroom. In this case, after the mobile phone 62 collects the first user speech "Recommend a song to the large screen device", the mobile phone 62 does not determine which large screen device is indicated by the user, and therefore may output a speech "Is the song recommended to the large screen device in the living room or the large screen device in the bedroom". The user 61 may input a corresponding speech to the mobile phone 62 for the output speech of the mobile phone 62. For example, for a speech output by the mobile phone 62 "Is the song recommended to the large screen device in the living room or the large screen device in the bedroom?", the user 61 inputs a speech "The large screen device in the living room" to the mobile phone 62. In this way, the mobile phone 62 determines that the user wants to recommend a song to the large screen device in the living room.

Certainly, the mobile phone 62 may alternatively display text prompt information in an interface. For example, the text prompt information includes two options: "Large screen device in the living room" and "Large screen device in the bedroom". The user 61 may select one of the two options according to a requirement.

In addition to the music recommendation scenario shown above, the solution to cross-device dialog service connection provided in this embodiment of this application may be further applied to another scenario.

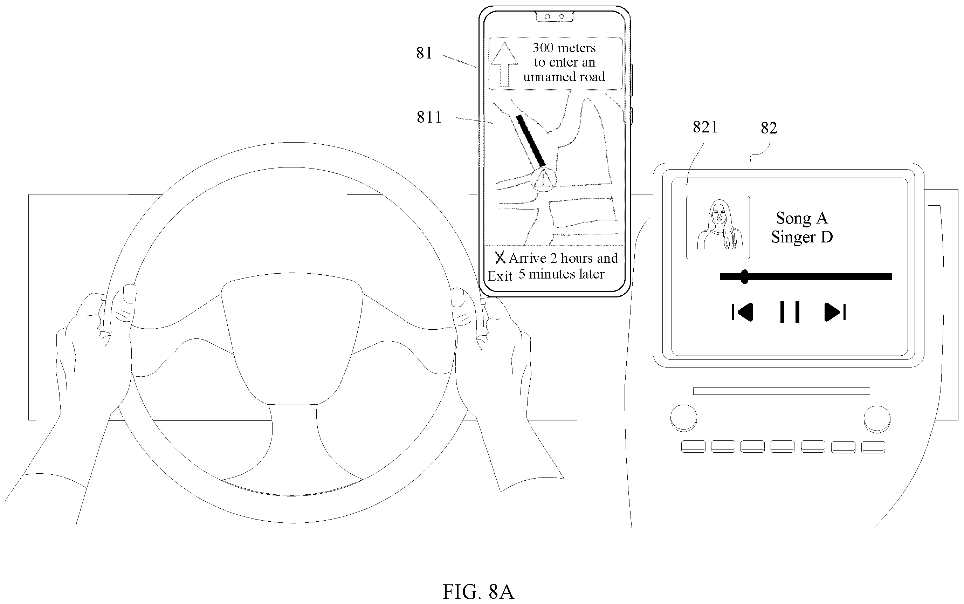

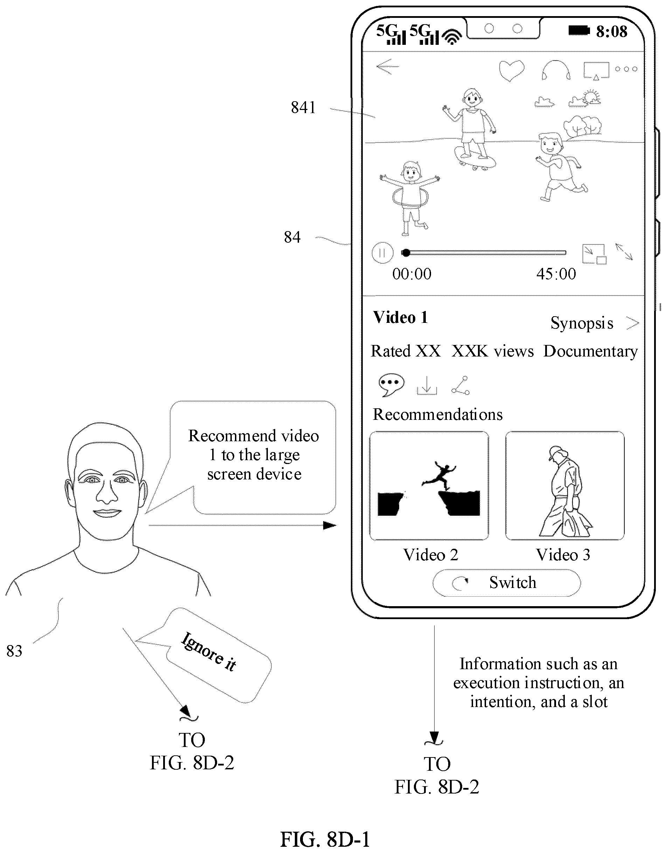

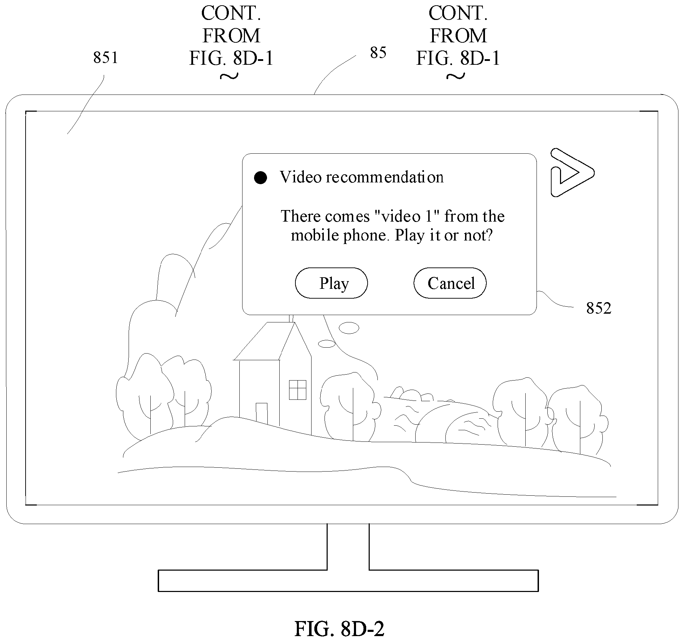

For example, FIG. 8A to FIG. 8C are schematic diagrams of a navigation scenario according to an embodiment of this application. As shown in FIG. 8A, in a traveling process of a vehicle, a user performs navigation by using a mobile phone 81, and plays music by using a head unit 82. In this case, the mobile phone 81 displays a navigation page 811, and the head unit 82 displays a music playing interface 821. In this case, the first electronic device is specifically the mobile phone 81, the second electronic device is the head unit 82, and the speech service system corresponding to FIG. 1 is deployed and a voice assistant is disposed on each of the mobile phone 81 and the head unit 82.

In a specific application, the user may wake up the voice assistant of the mobile phone 81 by using a wakeup word "Hey Celia", and then input a user speech "Navigate to location A" to the mobile phone 81. Based on the speech service system corresponding to FIG. 1, the mobile phone 81 determines that an intention of the user speech is navigating and an entity of a target location slot is location A, and generates a corresponding execution instruction. The mobile phone 81 opens a navigation application in response to the execution instruction, obtains a route from a current location of the user to location A, and displays the navigation interface 811.

At a moment (for example, a battery of the mobile phone 81 is running out), the user wants to connect a navigation task from the mobile phone 81 to the head unit 82, even if the head unit 82 is used for navigation. The user may input a user speech "Transfer a current navigation task to the head unit" to the mobile phone 81. Based on the speech service system corresponding to FIG. 1, the mobile phone 81 determines that an intention of a user speech "Connect a current navigation task to the head unit" is connecting the navigation task, determines that an entity of a target device slot is the head unit, and generates a corresponding execution instruction. In addition, because the target device slot may be extracted from the user speech "Connect a current navigation task to the head unit", and an entity of the target device slot is the head unit, it may be determined that a service needs to be transferred.

The mobile phone 81 transmits, to the head unit 82, information such as an execution instruction, a historical intention, and a corresponding slot that are corresponding to the user speech "Connect a current navigation task to the head unit". In this case, the historical intention includes an intention corresponding to the user speech "Navigate to location A" and an intention of the user speech "Connect a current navigation task to the head unit". Correspondingly, the corresponding slot of the historical intention includes a slot extracted from the user speech "Navigate to location A" and a slot extracted from the user speech "Connect a current navigation task to the head unit". In this case, the execution instruction includes navigation route information.

Certainly, the mobile phone 81 may further transmit a dialog corpus, navigation application status information, schedule application status information, and the like to the head unit 82 together. In this case, the dialog corpus includes a corpus "Navigate to location A" and a corpus "Connect a current navigation task to the head unit". The navigation application status information includes a historical navigation target location, a historical navigation route, and the like of the user, and the schedule application status information includes schedule event information of the user.

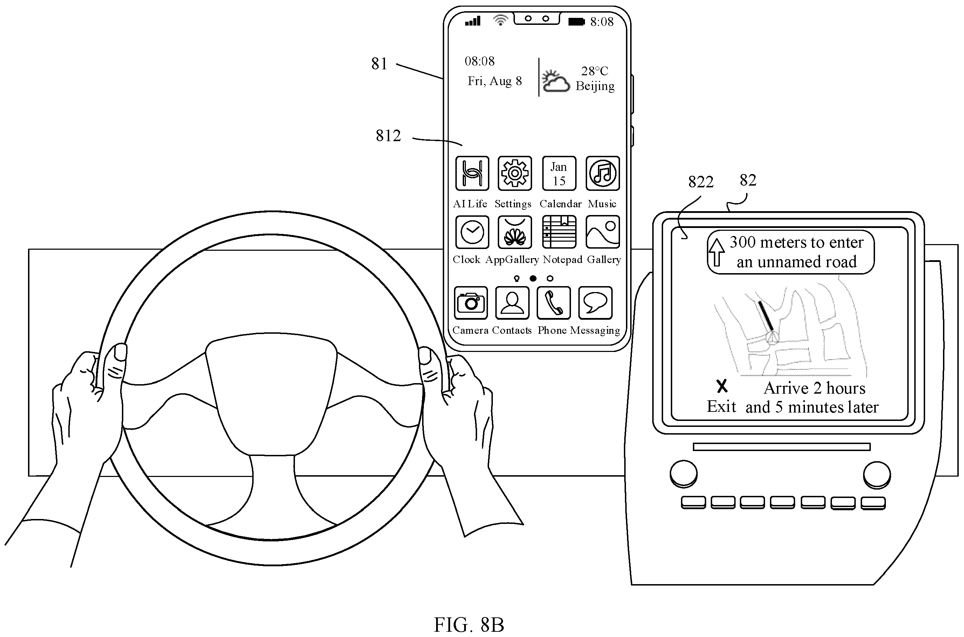

After receiving the information such as the execution instruction, the historical intention, and the corresponding slot from the mobile phone 81, the head unit 82 displays, in response to the execution instruction, a navigation interface 822 shown in FIG. 8B, locally stores the information such as the historical intention and the corresponding slot, and uses the information such as the historical intention, the corresponding slot, and the dialog corpus as a latest context of the local semantic understanding module. In this case, after connecting the navigation task to the head unit 82, the mobile phone 81 may exit from the navigation interface, and display a main interface 812 shown in FIG. 8B, or may be in a screen-off state.

In a process in which the user performs navigation by using the head unit 82, a route may need to be replanned for a reason (for example, there is traffic congestion on a current navigation route). In this case, the user may input the user speech "Replan the route" to the head unit 82. After the head unit 82 collects the user speech "Replan the route", the speech is first converted into a text by using the speech recognition module, and then the text is input to the semantic understanding module. The semantic understanding module determines, based on latest context information, to be specific, an intention of the user speech "Navigate to location A", a corpus "Navigate to location A", and a text of the user speech "Replan the route", that an intention of the user speech "Replan the route" is planning a navigation route from a current location to location A, an entity of a starting point slot is the current location, and an entity of a destination slot is location A. The semantic understanding module inputs the identified information such as the intention and the slot to the dialog management module, and the dialog management module outputs an execution instruction based on the information such as the intention and the slot.

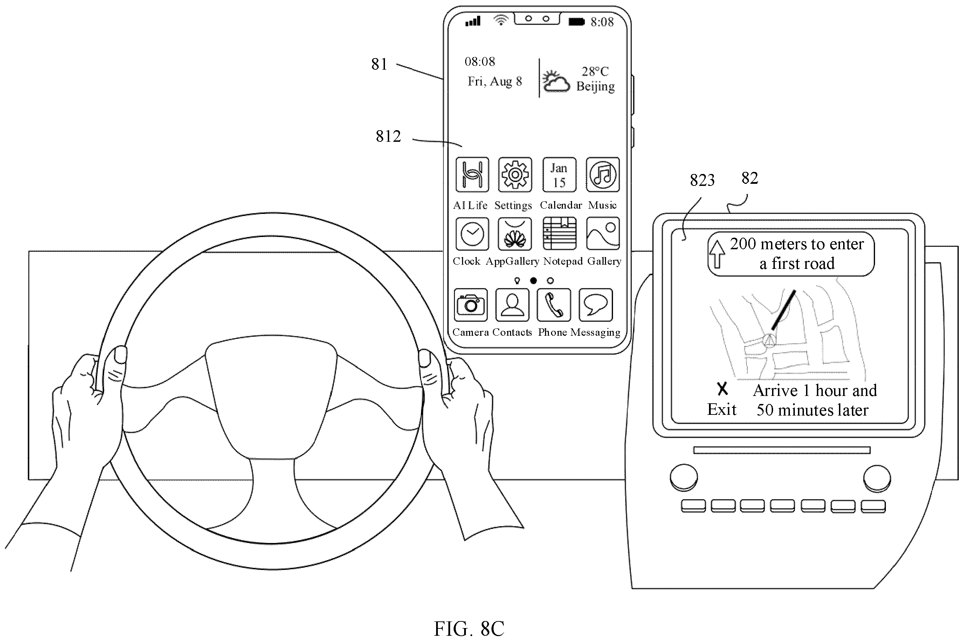

The head unit 82 replans a navigation route from the current location to location A in response to an execution instruction of the user speech "Replan the route", and displays a navigation interface 823 shown in FIG. 8C.

It can be learned from the foregoing that, in the head unit navigation scenario, the user may control, by using a speech, the mobile phone 81 to transfer a navigation task to the head unit 82, and when transferring a service, transmit information such as intentions, a corpus, and slots of a plurality of rounds of latest dialogs to the head unit 82 together. In this way, the head unit 82 may accurately identify an intention of a user speech based on the information such as the intentions, the corpus, and the slots of the plurality of rounds of latest dialogs, thereby implementing cross-device dialog service connection between the mobile phone 81 and the head unit 82.

For another example, FIG. 8D-1 and FIG. 8D-2 are a schematic diagram of a video recommendation scenario according to an embodiment of this application. As shown in FIG. 8D-1 and FIG. 8D-2, a mobile phone 84 displays a video playing interface 841, and as displayed in the video playing interface 841, video 1 is being currently played. In this case, a user 83 wants to recommend video 1 to a large screen device 85, in other words, wants to connect a video playing task to the large screen device 85, and uses the large screen device 85 to play video 1. Therefore, the user 83 says "Recommend video 1 to the large screen device" to the mobile phone 84.

After collecting the user speech "Recommend video 1 to the large screen device", the mobile phone 84 processes the user speech "Recommend video 1 to the large screen device" based on the speech service system corresponding to FIG. 1, determines an intention and a slot of the user speech "Recommend video 1 to the large screen device", and generates a corresponding execution instruction. In this case, the intention of the user speech "Recommend video 1 to the large screen device" is recommending a video, a target device slot is the large screen device 85, and an entity of a video name slot is video 1. The corresponding execution instruction is an instruction for playing a video.

Because the target device slot may be extracted from the user speech, and an entity of the target device slot is not the source device, the mobile phone 84 determines that a service needs to be transferred to the large screen device 85. If the mobile phone 84 determines that the video playing task needs to be transferred to the large screen device 85, the mobile phone 84 sends, to the large screen device 85, an intention, a slot, a corresponding execution instruction, and a corpus "Recommend video 1 to the large screen device" of the user speech "Recommend video 1 to the large screen device".

In this case, the large screen device 85 displays an interface 851, and as displayed in the interface 851, the large screen device 85 is playing another video. After receiving the information from the mobile phone 84, the large screen device 85 executes an execution instruction corresponding to the user speech "Recommend video 1 to the large screen device", and a window 852 pops up in the interface 851. Prompt information is displayed in the window 852 for asking the user whether to play video 1 from the mobile phone. The user may select a "Play" option in the window 852, so that the large screen device 85 plays video 1, or may select a "Cancel" option in the window 852, so that the large screen device 85 does not play video 1.

In addition, the large screen device 85 further uses information such as an intention, a slot, and a corpus of the received user speech "Recommend video 1 to the large screen device" as a latest context of a local semantic understanding module.

If the user 83 does not want to play video 1, the user 83 says "Ignore it" to the large screen device 85. After the large screen device 85 collects the user speech "Ignore it", the speech recognition module converts the user speech into a text, and then the speech understanding module determines, based on the text "Ignore it" and a latest context, to be specific, the information such as the intention and the slot of the user speech "Recommend video 1 to the large screen device", that the intention of the user speech "Ignore it" is cancelling playing, and an entity of a device slot is the large screen device, and generates a corresponding execution instruction by using the dialog management module.

After obtaining an execution instruction of the user speech "Ignore it", the large screen device 85 does not play video 1 in response to the execution instruction, and removes the window 852 from the interface 851.

It can be learned from the foregoing that in this embodiment, the user may transfer the video playing task from the mobile phone to the large screen device by using the speech "Recommend video 1 to the large screen device". When transferring a service, the mobile phone transmits information such as intentions and slots of a plurality of rounds of latest dialogs to the large screen device together with an execution instruction. In this way, the large screen device can accurately identify an intention of the user speech based on information such as a historical intention and a slot sent by the mobile phone, thereby implementing cross-device dialog service connection between the mobile phone and the large screen device.

In some other embodiments, alternatively, the first electronic device 41 and the second electronic device 42 may not include the speech service system corresponding to FIG. 1 or some modules of the speech service system. Instead, the speech service system is deployed on a device other than the first electronic device 41 and the second electronic device 42.

In this case, the first electronic device 41 and the second electronic device 42 are usually thin devices, to be specific, because processing resources, memory resources, and the like are very limited, a speech recognition engine, a semantic understanding engine, a dialog management engine, and the like in a speech service system cannot be deployed in the first electronic device 41 and the second electronic device 42.

Certainly, the first electronic device 41 and the second electronic device 42 may be alternatively rich devices. In this case, although the first electronic device 41 and the second electronic device 42 meet a condition for deploying a speech service system, the speech service system is actually deployed in a device other than the first electronic device 41 and the second electronic device 42.

For example, FIG. 9 is another schematic diagram of a system for cross-device dialog service connection according to an embodiment of this application. A first electronic device 91 includes a first application 911 and a first instruction interaction service 912, a second electronic device 92 includes a second application 921 and a second instruction interaction service 922, a third electronic device 93 includes a first speech recognition module 931, a first semantic understanding module 932, and a first dialog management module 933, and a fourth electronic device 94 includes a second speech recognition module 941, a second semantic understanding module 942, and a second dialog management module 943.

The first electronic device 91 is in communication connection to the third electronic device 93, and the second electronic device 92 is in communication connection to the fourth electronic device 94.

The third electronic device 92 and the fourth electronic device 94 may be cloud servers, and may further include an NLG module and a TTS module. Certainly, the third electronic device 92 and the fourth electronic device 94 may be alternatively terminal devices such as a mobile phone and a computer.

It should be noted that for similarities or resemblances between FIG. 5 and FIG. 9, refer to the foregoing description of FIG. 5. Details are not described herein again. The following describes a system procedure in FIG. 9 with reference to FIG. 10A and FIG. 10B.

In addition, the first electronic device 91 locally stores user information and/or application status information, and when sending information such as a first execution instruction, a historical intention, and a corresponding slot to the second electronic device 92, the first electronic device 91 may send the user information and/or the application status information to the second electronic device 92 together. For related descriptions such as the user information and the application status information, refer to the foregoing corresponding content. Details are not described herein again.

FIG. 10A and FIG. 10B are another schematic flowchart of a method for cross-device dialog service connection according to an embodiment of this application. The method may include the following steps.

Step S 1001: The first electronic device 91 collects a first user speech.

For example, FIG. 11 is a schematic diagram of a scenario in which a headset transfers music to a sound box for playing according to an embodiment of this application. A user 111 may input a first user speech "Transfer music to the sound box for playing" to a smart headset 112. Specifically, the user 111 uses the smart headset 112 to play music on the way home, and the played music is music locally stored in the smart headset 112. After returning to the home, the user 111 wants to transfer the music being played by the smart headset 112 to a smart sound box 113 for playing, and therefore says "Transfer music to the sound box for playing" to the smart headset 112. The smart headset 112 collects the first user speech "Transfer music to the sound box for playing" by using a sound collection apparatus.

In this scenario, the first electronic device 91 is a smart headset 112, the second electronic device 92 is a smart sound box 113, the third electronic device 93 is a cloud server 115, and the fourth electronic device 94 is a cloud server 114.

The smart headset 112 includes a processor, a memory, and the like, stores a plurality of songs locally, and may be connected to wireless Wi-Fi. A voice assistant application is installed in the smart headset. The smart sound box 113 includes a processor, a memory, and the like, and may be connected to wireless Wi-Fi. A voice assistant application is installed in the smart sound box.

Step S1002: The first electronic device 91 sends the first user speech to the fourth electronic device 94.

A scenario in FIG. 11 is used as an example. After returning to home, the smart headset 112 is automatically connected to a wireless router at home, and after collecting the first user speech "Transfer music to the sound box for playing", a voice assistant in the smart headset 112 uploads the first user speech "Transfer music to the sound box for playing" to the cloud server 114 through wireless Wi-Fi.

Step S1003: The fourth electronic device 94 converts the first user speech into a first text.

For example, as shown in FIG. 9, after receiving the first user speech, the fourth electronic device 94 inputs the first user speech to a first speech recognition module 941, and the first speech recognition module 941 converts the first user speech into the first text.

Step S1004: The fourth electronic device 94 extracts a first intention and a first slot from the first text.

As shown in FIG. 9, the first speech recognition module 941 inputs the obtained first text to a first semantic understanding module 942. The first semantic understanding module 942 performs intention identification on the first text to obtain the first intention and the first slot.

The scenario in FIG. 11 is used as an example. The first text is "Transfer music to the sound box for playing". It may be determined from the first text that the first intention is transferring music for playing, the first slot includes a target device slot, and an entity of the target device slot is a sound box.

Step S1005: The fourth electronic device 94 generates, based on the first intention and the first slot, a first execution instruction corresponding to the first user speech.

As shown in FIG. 9, after obtaining the first intention and the first slot, the first semantic understanding module 942 inputs the first intention and the first slot to a first dialog management module 943. The first dialog management module 943 generates the first execution instruction based on the first intention and the first slot.

The scenario in FIG. 11 is used as an example. The first intention is transferring music for playing, the first slot includes a target device slot, and the first execution instruction is an execution instruction for playing music.

Step S1006: The fourth electronic device 94 sends the first execution instruction, the first intention, and the first slot to the first electronic device 91.

It should be noted that the fourth electronic device 94 may further transmit the first text to the first electronic device 91. For example, in the scenario in FIG. 11, the cloud server 114 may transmit the text of the first user speech "Transfer music to the sound box for playing" to the smart headset 112. Step S1007: The first electronic device 91 sends information such as the first execution instruction, a historical intention, and a corresponding slot to the second electronic device 92, where the historical intention includes the first intention, and the corresponding slot includes the first slot.

It should be noted that the historical intention may include intentions of latest N rounds of dialogs. In addition to transmitting the first execution instruction, the historical intention, and the corresponding slot to the second electronic device 92, the first electronic device 91 may further transmit context information and application status information to the second electronic device.

Related information such as the intentions, slots, and a corpus of the latest N rounds of dialogs may be locally stored in the first electronic device 91, or may be stored in the fourth electronic device 94. In this case, after determining that information such as an execution instruction, an intention, and a slot needs to be sent to the second electronic device 92, the fourth electronic device 94 transmits the related information such as the intentions, the slots, and the corpus of the latest N rounds of dialogs to the first electronic device 91 together.

In the scenario in FIG. 11, after receiving the first execution instruction, the first intention, and the first slot that are sent by the cloud server 114, the smart headset 112 may transmit information such as related information about a song that is being played currently, the first execution instruction, the historical intention, and the corresponding slot to the smart sound box 113. The related information about the song that is being played currently may include song name information, singer information, playing progress information, and the like.

Connection between the smart headset 112 and the smart sound box 113 may be Bluetooth connection or Wi-Fi point-to-point connection, or the smart headset 112 and the smart sound box 113 are connected to a same wireless router.

Step S1008: The second electronic device 92 executes the first execution instruction.

In the scenario in FIG. 11, after receiving the information transmitted by the smart headset 112, the smart sound box 113 may learn information such as the song name and the playing progress based on the related information about the song that is currently being played. In this case, the song name is song A. In response to the first execution instruction, the smart sound box 113 sends a prompt speech "There comes song A from the headset. Play it or not?" to the user 111. If the user 111 does not want to play song A, the user 111 says "Switch" to the smart sound box 113.

Certainly, when responding to the first execution instruction, the smart sound box 113 may alternatively directly play a corresponding song, and does not send a corresponding prompt speech. In this case, after playing song A on the smart sound box 113, the user 111 may say "Switch" to the smart sound box 113, to switch to another song for playing.

Step S1009: The second electronic device 92 collects a second user speech.

In the scenario in FIG. 11, the second user speech is "Switch".

Step S 1010: The second electronic device 92 sends information such as the second user speech, a historical intention, and a corresponding slot to the third electronic device 93.

Step S 1011: The third electronic device 93 converts the second user speech into a second text.

As shown in FIG. 9, after the third electronic device 93 receives the information such as the second user speech, the historical intention, and the corresponding slot, the third electronic device 93 may input the second user speech to a second speech recognition module 931. The second speech recognition module 931 converts the second user speech into the second text.

In the scenario in FIG. 11, the cloud server 115 converts the second user speech "Switch" into the second text "Switch".

Step S1012: The third electronic device 93 extracts a second intention and a second slot from the second text based on the information such as the historical intention and the corresponding slot.

As shown in FIG. 9, the second speech recognition module 931 inputs the second text to a second semantic understanding module 932. The second semantic understanding module 932 determines the second intention and the second slot of the second user speech based on information such as the second text, a target intention, and the first slot.

In the scenario in FIG. 11, the target intention is transferring music for playing, an entity of the target device slot is the smart sound box 113, and the second text is "Switch". The semantic understanding module on the cloud server 115 may determine that the second intention is playing music, the second slot includes a device slot, and an entity of the device slot is the smart sound box 113.

Step S1013: The third electronic device 93 generates, based on the second intention and the second slot, a second execution instruction corresponding to the second user speech.

As shown in FIG. 9, the second semantic understanding module 932 inputs the obtained information such as the second intention and the second slot to a second dialog management module 933, and the second dialog management module 933 inputs the second execution instruction.

Step S1014: The third electronic device 93 sends the second execution instruction to the second electronic device 92.

Step S1015: The second electronic device 92 executes the second execution instruction.

The scenario in FIG. 11 is used as an example. After receiving the second execution instruction sent by the cloud server 115, the smart sound box 113 automatically plays song B in response to the second execution instruction.

In some other embodiments, one of the first electronic device 41 and the second electronic device 42 does not include the speech service system corresponding to FIG. 1 or some modules of the speech service system, and the other one is configured with the speech service system corresponding to FIG. 1 or some modules of the speech service system.

For example, FIG. 12 is still another schematic diagram of a system for cross-device dialog service connection according to an embodiment of this application. The system may include a first electronic device 121, a second electronic device 122, and a third electronic device 123.

The first electronic device 121 includes a first application 1211, a first speech recognition module 1212, a first semantic understanding module 1213, a first dialog management module 1214, and a first instruction interaction service 1215.

The second electronic device 122 includes a second application 1221 and a second instruction interaction service 1222.

The third electronic device 123 includes a second speech recognition module 1231, a second semantic understanding module 1232, and a second dialog management module 1233.

In addition, the first electronic device 121 locally stores user information and/or application status information, and when sending information such as a first execution instruction, a historical intention, and a corresponding slot to the second electronic device 122, the first electronic device 121 may send the user information and/or the application status information to the second electronic device 122 together. For related descriptions such as the user information and the application status information, refer to the foregoing corresponding content. Details are not described herein again.

FIG. 13A and FIG. 13B are still another schematic flowchart of a method for cross-device dialog service connection according to an embodiment of this application. The method may include the following steps.

Step S1301: The first electronic device 121 collects a first user speech.

Step S1302: The first electronic device 121 converts the first user speech into a first text.

As shown in FIG. 12, after the first electronic device 121 collects the first user speech, the first application 1211 inputs the first user speech to the first speech recognition module 1212. The first speech recognition module 1212 converts the first user speech into the first text.

A scenario in FIG. 14 is used as an example. The first electronic device 121 is a mobile phone 142, the second electronic device is a smart sound box 143, and the third electronic device 123 is a cloud server 144. FIG. 14 is a schematic diagram of a scenario in which a mobile phone recommends music to a smart sound box according to an embodiment of this application.

As shown in FIG. 14, the mobile phone 142 displays a playing interface 1421, and as displayed in the playing interface 1421, the mobile phone 142 is playing song C. In this case, a user 141 says "Recommend a song to the sound box" to the mobile phone 142, and the mobile phone 142 collects a first user speech "Recommend a song to the sound box", and converts the first user speech "Recommend a song to the sound box" into a first text "Recommend a song to the sound box" by using a speech recognition module.

Step S1303: The first electronic device 121 extracts a first intention and a first slot from the first text.

As shown in FIG. 12, after converting the first user speech into the first text, the first speech recognition module 1212 inputs the first text to the first semantic understanding module 1213, so as to extract the first intention and the first slot by using the first semantic understanding module 1213.

In the scenario in FIG. 14, the first text is "Recommend a song to the sound box", the first intention is recommending a song, the first slot includes a target device slot, and an entity of the target device slot is a sound box.

Step S1304: The first electronic device 12 generates, based on the first intention and the first slot, a first execution instruction corresponding to the first user speech.

As shown in FIG. 12, after obtaining the first intention and the first slot, the first semantic understanding module 1213 inputs the first intention and the first slot to the first dialog management module 1214, to obtain the first execution instruction output by the second dialog management module 1214.

In the scenario in FIG. 14, the first execution instruction is an instruction for playing a song.

As shown in FIG. 14, after collecting the first user speech "Recommend a song to the sound box", the mobile phone 142 processes the first user speech based on a speech service system, and displays an interface 1422. The first text and an answer text "OK" of the mobile phone 142 to the first user speech are displayed in the interface 1422.

Step S1305: The first electronic device 121 sends information such as the first execution instruction, a historical intention, and a corresponding slot to the second electronic device 122, where the historical intention includes the first intention, and the corresponding slot includes the first slot.

Step S1306: The second electronic device 122 executes the first execution instruction.

In the scenario in FIG. 14, in response to the first execution instruction, the smart sound box 143 sends a prompt speech "There comes song A from the mobile phone. Play it or not?" to the user 141, to ask the user whether to play the song. Certainly, the smart sound box 143 may alternatively automatically play song A in response to the first execution instruction, without asking the user whether to play the song.

Step S1307: The second electronic device 122 collects a second user speech.

As shown in FIG. 14, the smart sound box 143 sends the prompt speech "There comes song A from the mobile phone. Play it or not?", the user 141 says "Switch" to the smart sound box 143, and the smart sound box 143 collects the second user speech "Switch".

Step S1308: The second electronic device 122 sends information such as the second user speech, a historical intention, and a corresponding slot to the third electronic device 123.

Step S1309: The third electronic device 123 converts the second user speech into a second text.

As shown in FIG. 12, the second application 1221 of the second electronic device 122 transmits information such as the second user speech, a historical intention, and a corresponding slot to the third electronic device 123. The third electronic device 123 inputs the second user speech to the second speech recognition module 1231, to obtain the second text output by the second speech recognition module 1231.

Step S1310: The third electronic device 123 extracts a second intention and a second slot from the second text based on the information such as the historical intention and the corresponding slot.

As shown in FIG. 12, after obtaining the second text output by the second speech recognition module 1231, the third electronic device 123 inputs the second text to the second semantic understanding module 1232. The second semantic understanding module 1232 outputs the second intention and the second slot based on information such as the second text, the historical intention, and the corresponding slot.

In the scenario in FIG. 14, the second text is "Switch", the historical intention includes recommending a song, the corresponding slot includes a target device slot, an entity of the target device slot is the smart sound box 143, the second intention is playing a song, the second slot includes a device slot, and an entity of the device slot is the smart sound box 143.

Step S1311: The third electronic device 123 generates, based on the second intention and the second slot, a second execution instruction corresponding to the second user speech.

As shown in FIG. 12, the second semantic understanding module 1232 inputs the second intention and the second slot to the second dialog management module 1233, to obtain the second execution instruction output by the second dialog management module 1233.

Step S1312: The third electronic device 123 sends the second execution instruction to the second electronic device 122.

Step S1313: The second electronic device 122 executes the second execution instruction.

In the scenario in FIG. 14, after receiving the second execution instruction, the smart sound box 143 automatically plays song B in response to the second execution instruction.

A type of the electronic device in embodiments of this application may be random. For example, the first electronic device may be, but is not limited to, a mobile phone, a tablet computer, a smart sound box, a smart screen (which may also be referred to as a smart television), a wearable device, or the like. Similarly, the second electronic device may also be, but is not limited to, a mobile phone, a tablet computer, a smart sound box, a smart screen (which may also be referred to as a smart television), a wearable device, or the like.

As an example rather than a limitation, a specific structure of the first electronic device or the second electronic device may be shown in FIG. 15. FIG. 15 is a schematic diagram of a hardware structure of an electronic device according to an embodiment of this application.

As shown in FIG. 15, an electronic device 1500 may include a processor 1510, an internal memory 1520, a communication module 1530, an audio module 1540, a loudspeaker 1541, a microphone 1542, and an antenna.

It may be understood that, the structure shown in this embodiment of this application does not constitute a specific limitation on the electronic device 1500. In some other embodiments of this application, the electronic device 1500 may include more or fewer components than those shown in the figure, or some components may be combined, or some components may be split, or different component arrangements may be used. The components shown in the figure may be implemented by hardware, software, or a combination of software and hardware.

For example, when the electronic device 1500 is a mobile phone, the electronic device 1500 may further include an external memory interface, a universal serial bus (universal serial bus, USB) interface, a charging management module, a power management module, a battery, a receiver, a headset jack, a sensor module, a button, a motor, an indicator, a camera, a display, a subscriber identity module (subscriber identification module, SIM) card interface, and the like. The sensor module may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The processor 1510 may include one or more processing units. For example, the processor 1510 may include an application processor (application processor, AP), a modem processor, a controller, a memory, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 1500. The controller may generate an operation control signal based on an instruction operation code and a time sequence signal, to complete control of instruction reading and instruction execution. A memory may be further disposed in the processor 1510, and is configured to store instructions and data.

In some embodiments, the processor 1510 may include one or more interfaces. The interface may include an inter-integrated circuit sound (inter-integrated circuit sound, I2S) interface, a pulse code modulation (pulse code modulation, PCM) interface, a general-purpose input/output (general-purpose input/output, GPIO) interface, and the like.

The I2S interface may be configured for audio communication. In some embodiments, the processor 1510 may include a plurality of groups of I2S buses. The processor 1510 may be coupled to the audio module 1540 through an I2S bus, to implement communication between the processor 1510 and the audio module 1540.

The PCM interface may also be configured for audio communication, sampling, quantizing, and encoding an analog signal. In some embodiments, the audio module 1540 may be coupled to a wireless communication module 1 in the communication module 1530 by using a PCM bus interface. Both the I2S interface and the PCM interface may be used for audio communication.

The GPIO interface may be configured by software. The GPIO interface may be configured as a control signal or a data signal. In some embodiments, the GPIO interface may be configured to connect the processor 1510 to the audio module 1540, and the like. The GPIO interface may alternatively be configured as an I2S interface or the like.

It may be understood that an interface connection relationship between the modules that is shown in this embodiment of this application is merely an example for description, and does not constitute a limitation on a structure of the electronic device 1500. In some other embodiments of this application, the electronic device 1500 may alternatively use an interface connection manner different from that in the foregoing embodiment, or use a combination of a plurality of interface connection manners.

The communication module 1530 may include a mobile communication module and/or a wireless communication module.

A wireless communication function of the electronic device 1500 may be implemented by using the antenna, the mobile communication module, the wireless communication module, the modem processor, the baseband processor, and the like.

The antenna is configured to transmit and receive an electromagnetic wave signal. The mobile communication module may provide a solution applied to the electronic device 1500 for wireless communication such as 2G/3G/4G/5G. The mobile communication module may include at least one filter, a switch, a power amplifier, a low noise amplifier (low noise amplifier, LNA), and the like. The mobile communication module may receive an electromagnetic wave through an antenna, perform processing such as filtering and amplifying on the received electromagnetic wave, and transmit the received electromagnetic wave to a modem processor for demodulation. The mobile communication module may further amplify a signal modulated by the modem processor, which is converted into an electromagnetic wave that is then radiated out via an antenna 1. In some embodiments, at least some function modules in the mobile communication module may be disposed in the processor 1510. In some embodiments, at least some function modules in the mobile communication module may be disposed in a same component as at least some modules in the processor 1510.

The modem processor may include a modulator and a demodulator. The modulator is configured to modulate a low-frequency baseband signal to be transmitted into a medium-highfrequency signal. The demodulator is configured to demodulate a received electromagnetic wave signal into a low frequency baseband signal. Then the demodulator transfers the low-frequency baseband signal obtained through demodulation to the baseband processor for processing. The low-frequency baseband signal is transferred to the application processor after being processed by the baseband processor. The application processor outputs a sound signal by using an audio device (not limited to the loudspeaker).

The wireless communication module may provide a solution applied to the electronic device 1500 for wireless communication including a wireless local area network (wireless local area network, WLAN) (for example, wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module may be one or more devices integrating at least one communication processing module. The wireless communication module receives an electromagnetic wave through an antenna, performs frequency modulation and filtering processing on the electromagnetic wave signal, and sends the processed signal to the processor 1510. The wireless communication module may further receive a to-be-sent signal from the processor 1510, perform frequency modulation and amplification on the to-be-sent signal, and convert the signal into an electromagnetic wave that is then radiated out via an antenna.

For example, a mobile phone transmits information such as an execution instruction, a historical intention, and a slot to a large screen device through Wi-Fi point-to-point connection.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented by using the NPU, for example, image recognition, facial recognition, speech recognition, and text understanding. For example, the mobile phone recognizes an input user speech by using an NPU, to obtain text information of the user speech; and performs semantic understanding on the text information of the user speech, to extract a slot and an intention of the user speech.

The internal memory 1520 may be configured to store computer-executable program code. The executable program code includes instructions. The processor 1510 runs the instructions stored in the internal memory 1520, to perform various function applications of the electronic device 1500 and data processing. The internal memory 1520 may include a program storage area and a data storage area. The program storage area may store an operating system, an application required by at least one function (for example, a sound playing function), and the like. The data storage area may store data (such as audio data) created when the electronic device 100 is used. In addition, the internal memory 121 may include a high-speed random access memory, or may include a nonvolatile memory such as at least one disk storage device, a flash memory, or a universal flash storage (universal flash storage, UFS).

In this embodiment of this application, the internal memory 1520 stores a voice assistant application or an application integrated with a voice assistant function.

The electronic device 1500 may use the audio module 1540, the loudspeaker 1541, the microphone 1542, the application processor, and the like, to implement an audio function, and the like.

The audio module 1540 is configured to convert digital audio information into an analog audio signal for output, and is also configured to convert analog audio input into a digital audio signal. The audio module 1540 may be further configured to decode and decode an audio signal. In some embodiments, the audio module 1540 may be disposed in the processor 1510, or some functional modules in the audio module 1540 are disposed in the processor 1510.

The loudspeaker 1541, also referred to as a "speaker", is configured to convert an audio electrical signal into a sound signal. The electronic device 1500 may listen to music or listen to a hands-free call by using the loudspeaker 170A.

The microphone 1542, also referred to as a "mike" or a "mic", is configured to convert a sound signal into an electrical signal. When a user talks with a voice assistant of the electronic device, the user may speak with the mouth approaching the microphone 1542, to input a sound signal to the microphone 1542. At least one microphone 1542 may be disposed in the electronic device 1500. In some other embodiments, two microphones 1542 may be disposed in the electronic device 1500, to collect a sound signal and implement a noise reduction function. In some other embodiments, three, four, or more microphones 1542 may alternatively be disposed in the electronic device 1500, to collect a sound signal, implement noise reduction, and identify a sound source, to implement a directional recording function and the like.

In this embodiment of this application, the electronic device 1510 may collect a user speech by using the microphone 1542 and the audio module 1540, and output a speech by using the loudspeaker 1541 and the audio module 1540, to implement a human-machine dialog.

A software system of the electronic device 1500 may use a layered architecture, an event-driven architecture, a microkernel architecture, a micro service architecture, or a cloud architecture.

After the hardware architecture of the electronic device is described, the following describes a software system architecture of the electronic device.

A software system of the electronic device 1500 may use a layered architecture, an event-driven architecture, a microkernel architecture, a micro service architecture, or a cloud architecture. In embodiments of this application, a layered architecture is used as an example to describe a software structure of the electronic device 1500.

In the layered architecture, software is divided into several layers, and each layer has a clear role and responsibility. The layers communicate with each other through a software interface. In some embodiments, an Android system is divided into four layers: an application layer, an application framework layer, an Android runtime (Android runtime) and system library, and a kernel layer from top to bottom.

The application layer may include some application packages. For example, the application packages may include applications such as Voice assistant, Camera, Gallery, Calendar, Phone, Map, Navigation, WLAN, Bluetooth, Music, Videos, and Messages.

An application framework layer provides an application programming interface (application programming interface, API) and a programming framework for an application at the application layer. The application framework layer includes some predefined functions. For example, the application framework layer may include a window manager, a content provider, a view system, a phone manager, a resource manager, a notification manager, and the like.

The window manager is configured to manage window programs. The window manager can obtain a size of a display, determine whether there is a status bar, lock the screen, capture the screen, and the like. The content providers are configured to store and retrieve data and make the data accessible to applications. The data may include videos, images, audio, calls made and received, browsing history and bookmarks, phonebook, and the like. The view system includes visual controls, such as a control for displaying text, a control for displaying pictures, and the like. The view system may be configured to build an application. A display interface may include one or more views. For example, a display interface including a short message notification icon may include a view for displaying text and a view for displaying pictures. The phone manager is configured to provide a communication function of the electronic device 1500, for example, management of a call status (including answering, declining, or the like). The resource manager provides various resources for applications, such as localized strings, icons, pictures, layout files, and video files.

The notification manager enables an application to display notification information in the status bar, and can be used to communicate notification-type messages, which may automatically disappear after a short stay without user interaction. For example, the notification manager is configured to give notifications of download completion, messages, and the like. The notification manager may also be a notification that appears in the top status bar of the system in the form of a chart or scroll bar text, for example, a notification of an application running in the background, or a notification that appears on the screen in the form of a dialog window. For example, text information is displayed in the status bar, an alert tone is issued, the electronic device vibrates, an indicator light blinks, and so on.

The Android runtime includes core libraries and virtual machines. The Android runtime is responsible for the scheduling and management of the Android system.

The core libraries include two parts, namely, functional functions that need to be invoked by the Java language, and core libraries of Android.

The application layer and the application framework layer run in the virtual machines. The virtual machines execute Java files of the application layer and the application framework layer as binary files. The virtual machines are configured to perform functions such as object life cycle management, stack management, thread management, security and exception management, and garbage collection.

The kernel layer is a layer between hardware and software. The kernel layer includes at least a display driver, a camera driver, an audio driver, and a sensor driver.

The electronic device provided in this embodiment of this application may include a memory, a processor, and a computer program that is stored in the memory and that is capable of running on the processor. When executing the computer program, the processor implements the method according to any one of the foregoing method embodiments.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product runs on an electronic device, the electronic device is enabled to implement the steps in the foregoing method embodiments when executing the computer program product.

An embodiment of this application further provides a chip system. The chip system includes a processor, the processor is coupled to a memory, and the processor executes a computer program stored in the memory, to implement the method in the foregoing method embodiments. The chip system may be a single chip or a chip module including a plurality of chips.

In the foregoing embodiments, the description of each embodiment has a focus. For a part that is not described in detail or recorded in an embodiment, refer to related descriptions in other embodiments. It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in the descriptions of the specification and claims of this application, the terms "first", "second", "third", and the like are merely intended for the purpose of differentiated description, but shall not be understood as an indication or an implication of relative importance. Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner.

It should be finally noted that foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A system for cross-device dialog service connection, comprising a first electronic device and at least one second electronic device, wherein
the first electronic device is configured to: collect a first user speech, and if it is determined that the first user speech comprises information indicating to send an instruction to the second electronic device, send first information and a first execution instruction to the second electronic device, wherein the first information comprises information describing an intention of the first user speech, and the first execution instruction is an execution instruction corresponding to the first user speech; and
the second electronic device is configured to: after receiving the first execution instruction, collect a second user speech, and execute a second execution instruction corresponding to the second user speech, wherein the second execution instruction is an instruction generated based on the first information and the second user speech.

2. The system according to claim 1, wherein the information describing the intention of the first user speech comprises a first text of the first user speech and/or a first intention of the first user speech.

3. The system according to claim 2, wherein the first information comprises texts and/or intentions of N rounds of dialogs, and N is a positive integer greater than 1;
the texts of the N rounds of dialogs comprise the first text of the first user speech, and the intentions of the N rounds of dialogs comprise the first intention of the first user speech; and
the N rounds of dialogs are user dialogs collected by the first electronic device.

4. The system according to claim 1, wherein the first execution instruction comprises information representing a slot of the first user speech.

5. The system according to any one of claims 1 to 4, wherein the first electronic device is specifically configured to:
perform speech recognition on the first user speech to obtain the first text;
perform semantic understanding on the first text to obtain the first intention and a first slot of the first user speech;
if the first slot comprises a target device slot, and an entity of the target device slot is the second electronic device, determine that the first user speech comprises information indicating to send an instruction to the second electronic device; and
generate, based on the first intention and the first slot, the first execution instruction corresponding to the first user speech.

6. The system according to any one of claims 1 to 4, wherein the system further comprises a third electronic device in communication connection to the first electronic device, and the first electronic device is specifically configured to:
send the first user speech to the third electronic device;
receive a first slot, the first intention, and the first execution instruction from the third electronic device, wherein the first slot and the first intention are extracted by the third electronic device from the first user speech, and the first execution instruction is an execution instruction that is corresponding to the first user speech and that is generated by the third electronic device based on the first slot and the first intention; and
if the first slot comprises a target device slot, and an entity of the target device slot is the second electronic device, determine that the first user speech comprises information indicating to send an instruction to the second electronic device.

7. The system according to any one of claims 1 to 6, wherein the second electronic device is specifically configured to:
perform speech recognition on the second user speech to obtain a second text;
perform semantic understanding on the second text based on the first information, to obtain semantic information of the second user speech; and
generate, based on the semantic information of the second user speech, the second execution instruction corresponding to the second user speech.

8. The system according to claim 7, wherein the second electronic device is specifically configured to:
use the first information as a latest context of a semantic understanding module, wherein the second electronic device comprises the semantic understanding module; and
input the second text to the semantic understanding module, to obtain the semantic information that is of the second user speech and that is output by the semantic understanding module, wherein the semantic understanding module performs semantic understanding on the second text by using the latest context.

9. The system according to any one of claims 1 to 6, wherein the system further comprises a fourth electronic device in communication connection to the second electronic device; and
the second electronic device is specifically configured to:
send the second user speech and the first information to the fourth electronic device; and
receive the second execution instruction and semantic information of the second user speech from the fourth electronic device, wherein
the semantic information of the second user speech is information obtained by performing, by the fourth electronic device, semantic understanding on the second user speech based on the first information, and the second execution instruction is an execution instruction that is corresponding to the second user speech and that is generated by the fourth electronic device based on the semantic information of the second user speech.

10. The system according to claim 7, wherein the first electronic device is specifically configured to:
determine whether a user account of the first electronic device and a user account of the second electronic device belong to a same user; and
if the user account of the first electronic device and the user account of the second electronic device belong to the same user, send the first execution instruction and the first information to the second electronic device, and send second information to the second electronic device, wherein the second information comprises any one of or any combination of first user information, scenario information, and first application status information, wherein
the first user information is information describing a user of the first electronic device, the first application status information is information representing a first target application on the first electronic device, and the scenario information is information describing a user scenario; and
the second electronic device is specifically configured to:
generate the second execution instruction based on the first information, the second user speech, and the second information.

11. The system according to claim 10, wherein the first electronic device is specifically configured to:
if the user account of the first electronic device and the user account of the second electronic device do not belong to the same user, send the first execution instruction and the first information to the second electronic device; and
the second electronic device is specifically configured to:
generate the second execution instruction based on the first information, the second user speech, and third information, wherein the third information comprises second user information and/or second application status information, wherein
the second user information is information describing a user of the second electronic device, and the second application status information is information representing a second target application on the second electronic device.

12. The system according to claim 1, wherein if there are at least two second electronic devices, and connection manners between the at least two second electronic devices and the first electronic device are different, the first electronic device is specifically configured to:
determine a type of a communication connection to each of the at least two second electronic devices; and
send the first information and the first execution instruction to each of the at least second electronic devices based on the type of the communication connection by using a different communication connection.

13. The system according to claim 1, wherein the second electronic device is specifically configured to:
collect the second user speech when the first execution instruction is executed or when a user is prompted whether to execute the first execution instruction.

14. The system according to claim 1, wherein the second electronic device is further configured to:
after receiving the first execution instruction, wake up a voice assistant, wherein the second electronic device comprises the voice assistant.

15. The system according to claim 1, wherein the first execution instruction is an instruction for recommending music, and the second execution instruction is an instruction for recommending another song.

16. A method for cross-device dialog service connection, applied to a first electronic device, wherein the method comprises:
collecting a first user speech, and
sending first information and a first execution instruction to a second electronic device after it is determined that the first user speech comprises information indicating to send an instruction to the second electronic device, wherein
the first information comprises information describing an intention of the first user speech, and the first execution instruction is an execution instruction corresponding to the first user speech.

17. The method according to claim 16, wherein the information describing the intention of the first user speech comprises a first text of the first user speech and/or a first intention of the first user speech.

18. The method according to claim 17, wherein the first information comprises texts and/or intentions of N rounds of dialogs, and N is a positive integer greater than 1;
the texts of the N rounds of dialogs comprise the first text of the first user speech, and the intentions of the N rounds of dialogs comprise the first intention of the first user speech; and
the N rounds of dialogs are user dialogs collected by the first electronic device.

19. The method according to claim 16, wherein the first execution instruction comprises information representing a slot of the first user speech.

20. The method according to any one of claims 16 to 19, wherein the sending first information and a first execution instruction to a second electronic device after it is determined that the first user speech comprises information indicating the second electronic device comprises:
performing speech recognition on the first user speech to obtain the first text;
performing semantic understanding on the first text to obtain the first intention and a first slot of the first user speech;
if the first slot comprises a target device slot, and an entity of the target device slot is the second electronic device, determining that the first user speech comprises information indicating to send an instruction to the second electronic device;
generating, based on the first intention and the first slot, the first execution instruction corresponding to the first user speech; and
sending the first information and the first execution instruction to the second electronic device, wherein the first information comprises the first intention and/or the first text.

21. The method according to any one of claims 16 to 19, wherein the sending first information and a first execution instruction to a second electronic device after it is determined that the first user speech comprises information indicating the second electronic device comprises:
sending the first user speech to a third electronic device;
receiving a first slot, the first intention, and the first execution instruction from the third electronic device, wherein the first slot and the first intention are extracted by the third electronic device from the first user speech, and the first execution instruction is an execution instruction that is corresponding to the first user speech and that is generated by the third electronic device based on the first slot and the first intention;
if the first slot comprises a target device slot, and an entity of the target device slot is the second electronic device, determining that the first user speech comprises information indicating to send an instruction to the second electronic device; and
sending the first information and the first execution instruction to the second electronic device, wherein the first information comprises the first intention and/or the first text of the first user speech.

22. The method according to claim 16, wherein before the first information and the first execution instruction are sent to the second electronic device, the method further comprises:
determining whether a user account of the first electronic device and a user account of the second electronic device belong to a same user; and
if the user account of the first electronic device and the user account of the second electronic device belong to the same user, performing a step of sending the first execution instruction and the first information to the second electronic device, and send second information to the second electronic device, wherein the second information comprises any one of or any combination of first user information, scenario information, and first application status information, wherein
the first user information is information describing a user of the first electronic device, the scenario information is information describing a user scenario, and the first application status information is information representing a first target application on the first electronic device.

23. The method according to claim 16, wherein if there are at least two second electronic devices, the sending the first information and the first execution instruction to the second electronic device comprises:
determining a type of a communication connection to each of the at least two second electronic devices; and
sending the first information and the first execution instruction to each of the at least second electronic devices based on the type of the communication connection by using a different communication connection.

24. The method according to claim 16, wherein the first execution instruction is an instruction for recommending music.

25. A method for cross-device dialog service connection, applied to a second electronic device, wherein the method comprises:
receiving a first execution instruction and first information from a first electronic device, wherein the first information comprises information describing an intention of a first user speech, the first execution instruction is an execution instruction corresponding to the first user speech, and the first user speech is a speech that is collected by the first electronic device and that comprises information indicating to send an instruction to the second electronic device;
collecting a second user speech, and
executing a second execution instruction corresponding to the second user speech, wherein the second execution instruction is an instruction generated based on the first information and the second user speech.

26. The method according to claim 25, wherein the information describing the intention of the first user speech comprises a first text of the first user speech and/or a first intention of the first user speech.

27. The method according to claim 26, wherein the first information comprises texts and/or intentions of N rounds of dialogs, and N is a positive integer greater than 1;
the texts of the N rounds of dialogs comprise the first text of the first user speech, and the intentions of the N rounds of dialogs comprise the first intention of the first user speech; and
the N rounds of dialogs are user dialogs collected by the first electronic device.

28. The method according to claim 25, wherein the first execution instruction comprises information representing a slot of the first user speech.

29. The method according to any one of claims 25 to 28, wherein the executing a second execution instruction corresponding to the second user speech comprises:
performing speech recognition on the second user speech to obtain a second text;
performing semantic understanding on the second text based on the first information, to obtain semantic information of the second user speech;
generating, based on the semantic information of the second user speech, the second execution instruction corresponding to the second user speech; and
executing the second execution instruction.

30. The method according to claim 29, wherein the performing semantic understanding on the second text based on the first information, to obtain semantic information of the second user speech comprises:
using the first information as a latest context of a semantic understanding module, wherein the second electronic device comprises the semantic understanding module; and
inputting the second text to the semantic understanding module, to obtain the semantic information that is of the second user speech and that is output by the semantic understanding module, wherein the semantic understanding module performs semantic understanding on the second text by using the latest context.

31. The method according to claim 29, wherein if a user account of the first electronic device and a user account of the second electronic device belong to a same user, the method further comprises:
receiving second information from the first electronic device, wherein the second information comprises any one of or any combination of first user information, scenario information, and first application status information; and
the generating, based on the semantic information of the second user speech, the second execution instruction corresponding to the second user speech comprises:
generating the second execution instruction based on the semantic information and the second information, wherein
the first user information is information describing a user of the first electronic device, the scenario information is information describing a user scenario, and the first application status information is information representing a first target application on the first electronic device.

32. The method according to claim 29, wherein if a user account of the first electronic device and a user account of the second electronic device do not belong to a same user, the generating, based on the semantic information of the second user speech, the second execution instruction corresponding to the second user speech comprises:
generating the second execution instruction based on the semantic information and third information, wherein
the third information comprises second user information and/or second application status information, the second user information is information describing a user of the second electronic device, and the second application status information is information representing a second target application on the second electronic device.

33. The method according to any one of claims 25 to 28, wherein the executing a second execution instruction corresponding to the second user speech comprises:
sending the second user speech and the first information to a fourth electronic device;
receiving the second execution instruction and semantic information of the second user speech from the fourth electronic device, wherein
the semantic information of the second user speech is information obtained by performing, by the fourth electronic device, semantic understanding on the second user speech based on the first information, and the second execution instruction is an execution instruction that is corresponding to the second user speech and that is generated by the fourth electronic device based on the semantic information of the second user speech; and
executing the second execution instruction.

34. The method according to claim 25, wherein the collecting a second user speech comprises:
collecting the second user speech when the first execution instruction is executed or when a user is prompted whether to execute the first execution instruction.

35. The method according to claim 25, wherein before the second user speech is collected, the method further comprises:
after receiving the first execution instruction, waking up a voice assistant, wherein the second electronic device comprises the voice assistant.

36. The method according to claim 25, wherein the second execution instruction is an instruction for recommending another song.

37. A terminal device, comprising a memory, a processor, and a computer program that is stored in the memory and that is capable of running on the processor, wherein when executing the computer program, the processor implements the method according to any one of claims 16 to 24 or 25 to 36.

38. A computer-readable storage medium, wherein the computer-readable storage medium stores a computer program, and when the computer program is executed by a processor, the method according to any one of claims 16 to 24 or 25 to 36 is implemented.
